# EUROPÄISCHE PATENTSCHRIFT

(11) **EP 2 137 022 B1**
(45) Veröffentlichungstag und Bekanntmachung des Hinweises auf die Patenterteilung: **28.12.2016**
(21) Anmeldenummer: 08716341.6
(22) Anmeldetag: 07.03.2008
(51) Int. Cl.: B60K 35/00

(54) **INFORMATIONSSYSTEM UND VERFAHREN ZUM BEREITSTELLEN VON INFORMATIONEN IN EINEM KRAFTFAHRZEUG MIT VERBESSERTER BEDIENBARKEIT**
INFORMATION SYSTEM AND METHOD FOR FURNISHING INFORMATION IN A MOTOR VEHICLE WITH IMPROVED OPERABILITY
SYSTÈME D'INFORMATION ET PROCÉDÉ DESTINÉ À FOURNIR DES INFORMATIONS DANS UN VÉHICULE À MOTEUR AVEC UNE EXPLOITABILITÉ AMÉLIORÉE

(30) Priorität: 17.03.2007 DE 102007012828
(43) Veröffentlichungstag der Anmeldung: 30.12.2009
(73) Patentinhaber: Volkswagen Aktiengesellschaft, 38440 Wolfsburg (DE); Audi AG, 85045 Ingolstadt (DE)
(72) Erfinder: WU, Yongmei, 38108 Braunschweig (DE); MEDLER, Andreas, 38268 Lengede (DE); CHRIST, Stefan, 85051 Ingolstadt (DE)
(86) Internationale Anmeldenummer: PCT/EP2008/001826
(87) Internationale Veröffentlichungsnummer: WO 2008/113485

(56) Entgegenhaltungen:
- EP-A- 0 371 284
- EP-A- 1 031 456
- EP-A- 1 477 895
- EP-A- 1 749 688
- EP-A- 1 754 622
- DE-A1- 19 955 890
- DE-A1-102005 017 313
- JP-A- 9 023 122

## Beschreibung

Die Erfindung betrifft ein Kraftfahrzeug mit einem Informationssystem, wobei das Informationssystem mindestens eine Ausgabeeinrichtung, eine Steuereinrichtung, eine Speichervorrichtung, in der Informationen über Fahrzeugsysteme, Fahrzeugfunktionen und/oder Dienste abgelegt sind, und mindestens eine Eingabevorrichtung zum Erfassen einer Nutzerauswahleingabe zur Auswahl eines der Fahrzeugsysteme, einer der Fahrzeugfunktionen oder eines der Dienste umfasst, wobei die Steuereinrichtung ausgebildet ist, als Reaktion auf die über die Nutzerauswahleingabe erfasste Auswahl zumindest einen Teil der Informationen über das ausgewählte Fahrzeugsystem, die ausgewählte Fahrzeugfunktion oder den ausgewählten Dienst mittels der mindestens einen Ausgabeeinrichtung auszugeben. Die Erfindung betrifft ferner ein Verfahren zum Bereitstellen von Informationen in einem Kraftfahrzeug über Fahrzeugsysteme, Fahrzeugfunktionen und/oder Dienste.

In Fahrzeugen gemäß dem Stand der Technik sind alle für einen Benutzer wissenswerten technischen Merkmale eines Kraftfahrzeugs sowie dessen Ausstattungseigentümlichkeiten in der Regel in einem in gedruckter Form vorliegenden Handbuch oder Bordbuch enthalten. Die Nutzung eines Handbuchs wird gemeinhin als aufwendig, komplex und eher mühsam betrachtet, da viele Benutzer eher ungern längere gedruckte Texte lesen und insbesondere umfangreiche technische Inhalte häufig als abschreckend empfinden. Ferner gestaltet sich das Auffinden der gewünschten Informationen häufig schwierig, da von einem Nutzer Kenntnisse über eine Bezeichnung des Fahrzeugsystems, der Fahrzeugfunktion und/oder des Dienstes erforderlich sind, um die entsprechenden Einträge im Bordhandbuch ausfindig zu machen.

In der DE 199 41 973 A1 sind ein Verfahren und eine Vorrichtung zur aktiven Hilfestellung eines Kraftfahrzeugführers mittels mindestens eines Steuergerätes und einer Ein- und Ausgabeeinheit offenbart. Dabei kann das Steuergerät auf die Daten von fahrzeugzustandsrelevanten Sensoren und Steuergeräten und/oder Komfortsteuergeräten und/oder interne oder externe Datenbanken zugreifen, wodurch eine automatische Unterstützung bei der Kommunikation zwischen dem Kraftfahrzeugführer und dem Fahrzeugsystem gegeben wird. Dabei wird insbesondere durch das Steuergerät ein kritischer Fahrzustand durch Auswertung der Daten der fahrzeugrelevanten Sensoren und Steuergeräte erfasst, sodann eine Liste von möglichen Handlungen des Kraftfahrzeugführers auf der Anzeigeeinheit dargestellt und eine durch den Kraftfahrzeugführer aus gewählte Handlung durch das Steuergerät durchgeführt. Hierbei werden die vom System angebotenen Informationen jedoch stets lediglich als Text in Listenform dargestellt. Eine Veränderung dieser Art der Informationsausgabe ist nicht vorgesehen, da es sich bei dem beschriebenen System auch nicht um eine allgemeine Informationsvorrichtung, sondern um ein System zur aktiven Hilfestellung durch automatisches Ausführen von Aktionen mittels eines Steuergerätes handelt. Weiter ist dieses System auch nicht dazu geeignet, den Kraftfahrzeugführer oder einen weiteren Nutzer möglichst umfassend über Fahrzeugsysteme, Fahrzeugfunktionen und/oder Dienste zu informieren und ihnen eine entsprechende Bedienung nahe zu bringen und zu erläutern.

Aus der DE 10 2005 002 277 A1 ist ein Informationssystem für ein Kraftfahrzeug mit einer Datenverarbeitungsvorrichtung und einer Anzeigevorrichtung zur Darstellung von gespeicherten Informationen bekannt, die mittels einer Bedieneinrichtung auswählbar sind, wobei es sich bei den Informationen um Informationen eines elektronischen Ratgeber-Handbuches handelt. Über die Bedieneinrichtung sind einzelne Kapitel des Ratgeber-Handbuches zur Darstellung durch die Anzeigevorrichtung auswählbar. Unter anderem kann das elektronische Ratgeber-Handbuch Anleitungen zur Verhaltensweise in Notfall- bzw. Pannensituationen sowie Hinweise zu Erste-Hilfe-Maßnahmen enthalten.

Aus der DE 199 55 89 A1 ist ein Verfahren und eine Vorrichtung zur Ausgabe von Bedienhinweisen für eine Fahrerinformationsvorrichtung mit einer Ausgabeeinheit, einer Bedieneinheit und einer Recheneinheit bekannt, mit der auf einfache Weise Bedienhinweise zu den Funktionen der Fahrerinformationsvorrichtung in einem Hilfezustand ausgegeben werden.

Aus der EP 1 477 895 A2 ist ein Verfahren und eine Vorrichtung zum Unterstützen eines Fahrers bekannt. Die Vorrichtung umfasst eine Benutzerschnittstelle, um Benutzeranfragen für erklärende Informationen hinsichtlich bestimmter Fahrzeugoperationen zu erfassen und um dem Bediener erklärende Informationen bezüglich bestimmter Fahrzeugoperationen zu vermitteln. Ferner umfasst die Vorrichtung einen Speicher zum Speichern der erklärenden Informationen für eine Vielzahl von Fahrzeugoperationen. Ein Informationsabfragemodul ist ausgebildet, die erklärende Information bezüglich der Fahrzeugoperationen von dem Speicher in Abhängigkeit der Benutzerabfrage abzurufen und dem Benutzer die erklärende Information bezüglich der Fahrzeugoperation über die Benutzerschnittstelle zu vermitteln. Die Benutzerschnittstelle weist einen Eingang für die Benutzerabfragen und einen Eingang der bestimmten Fahrzeugoperation auf.

Aus der EP 1 031 456 A2 ist ein Verfahren zur Unterstützung eines Benutzers eines Kraftfahrzeugs bei der Bedienung von Komponenten des Kraftfahrzeugs bekannt, wobei die Betriebszustände der Komponenten abhängig von der Betätigung von Betätigungselementen der Komponenten geschaltet werden, wobei ein Unterstützungsabfrageelement vorgesehen ist, abhängig von dessen Betätigung zu der nachfolgenden Betätigung eines Betätigungselements wenigstens einer Komponente lediglich eine Information über den mit diesem Betätigungselement im Normalbetrieb schaltbaren Betriebszustand ausgegeben wird.

Der nächstliegend bekanntgewordene Stand der Technik ist dem DE19955890 zu entnehmen.

Der Erfindung liegt die Aufgabe zugrunde, ein Informationssystem und ein Verfahren zur Bereitstellung von Informationen über Fahrzeugsysteme, Fahrzeugfunktionen und/oder Dienste zu schaffen, bei denen ein Nutzer die von ihm gewünschten Informationen auf einfache Weise auswählen kann.

Die Aufgabe wird erfindungsgemäß durch ein Informationssystem mit den Merkmalen des Patentanspruchs 1 sowie ein Verfahren zum Bereitstellen von Informationen mit den Merkmalen des Patentanspruchs 12 gelöst. Vorteilhafte Ausgestaltungen der Erfindung ergeben sich aus den Unteransprüchen.

Zur Lösung des technischen Problems ist bei einem Informationssystem eingangs genannter Art ein Informationsmodus vorgesehen, in dem mittels eines Betätigens oder Berührens einer Komponente oder eines Bedienelementes des Kraftfahrzeugs, die für eine Bedienung, Verwendung, Ausführung und/oder Bereitstellung eines der Fahrzeugsysteme, einer der Fahrzeugfunktionen und/oder eines der Dienste vorgesehen sind, die Nutzerauswahleingabe für die Auswahl des Entsprechenden der Fahrzeugsysteme, der Fahrzeugfunktionen oder der Dienste vornehmbar ist. Entsprechend ist ein Verfahren zum Bereitstellen von Informationen in einem Kraftfahrzeug über Fahrzeugsysteme, Fahrzeugfunktionen und/oder Dienste, wobei die Informationen in einer Speichervorrichtung abgelegt sind, vorgesehen, dass die folgenden Schritte umfasst:
- Erfassen einer Nutzerauswahleingabe mittels mindestens einer Eingabevorrichtung,
- Auswählen eines der Fahrzeugsysteme, einer der Fahrzeugfunktionen oder eines der Dienste, basierend auf einer Nutzerauswahleingabe,
- Auslesen zumindest eines Teils der Informationen über das ausgewählte Fahrzeugsystem, die ausgewählte Fahrzeugfunktion oder den ausgewählten Dienst aus der Speichervorrichtung und
- Ausgeben des zumindest einen Teils der Informationen über das ausgewählte Fahrzeugsystem, die ausgewählte Fahrzeugfunktion oder den ausgewählten Dienst mittels mindestens einer Ausgabeeinrichtung,
wobei vorgesehen ist, dass eine Aktivierung und/oder Deaktivierung eines Informationsmodus erfasst wird und im Informationsmodus von einer Komponente und/oder von einem Bedienelement des Kraftfahrzeugs, die für eine Bedienung, Verwendung, Ausführung und/oder Bereitstellung eines der Fahrzeugsysteme, einer der Fahrzeugfunktionen und/oder eines der Dienste vorgesehen sind, aufgrund einer Berühr- oder Betätigungshandlung eines Nutzers erzeugte Signale als Nutzerauswahleingabe für die Auswahl eines Entsprechenden der Fahrzeugsysteme, der Fahrzeugfunktionen oder der Dienste verwendet oder interpretiert werden.

Das vorgeschlagene Informationssystem und das Verfahren zum Bereitstellen von Informationen bieten den Vorteil, dass ein Nutzer einen Informationsmodus wählen kann und in diesem ein Fahrzeugsysteme, eine Fahrzeugfunktion und/oder einen Dienst auswählen kann, indem er ein Bedienelement oder eine Komponente des Fahrzeugs berührt oder bedient, die für eine Verwendung, Ausführung und/oder Bereitstellung des entsprechenden Fahrzeugsystems, der entsprechenden Fahrzeugfunktion oder des entsprechenden Dienstes vorgesehen sind. Die Auswahl des Fahrzeugssystems, der Fahrzeugfunktion oder des Dienstes erfolgt somit über eine reale Komponente des Fahrzeugs, die entweder genutzt wird, um das Fahrzeugsystem, die Fahrzeugfunktion oder den Dienst zu bedienen oder die für die Bereitstellung oder Ausführung oder eine Verwendung genutzt werden. Eine Kenntnis über eine Bezeichnung des entsprechenden Fahrzeugsystems, der entsprechenden Fahrzeugfunktion oder des entsprechenden Dienstes ist nicht erforderlich. Die Auswahl orientiert sich an einer realen Bediensituation. Will ein Nutzer ein ihm unbekanntes Fahrzeug kennen lernen, so kann er den Informationsmodus wählen und einzelne Bedienelemente berühren und/oder betätigen. Das Informationssystem bzw. das Verfahren zum Bereitstellen von Informationen liefern daraufhin die Informationen, die das entsprechende Bedienelement oder die Komponente und die hiermit verknüpfte Funktion, das verknüpfte Fahrzeugsystem oder den verknüpften Dienst erläutern. Hierdurch ist es für einen Nutzer auf sehr einfache und intuitive Weise möglich, sein Fahrzeug kennen zu lernen.

Eine Umsetzung der Erfindung wird erleichtert, wenn spezielle Signale bei einer Berühr- oder Betätigungshandlung im Informationsmodus erzeugt werden. Eine erfindungsgemäße Ausführungsform sieht daher vor, dass mindestens ein Erfassungssensor vorgesehen ist, der bei dem Betätigen oder dem Berühren der Komponente oder des Bedienelementes ein die Nutzerauswahleingabe repräsentierendes Signal zusätzlich zu einem gegebenenfalls von der Komponente oder dem Bedienelement erzeugten und für eine Bedienung, Verwendung, Ausführung und/oder Bereitstellung eines der Fahrzeugsysteme, einer der Fahrzeugfunktionen und/oder eines der Dienste vorgesehenen Signals erzeugt.

Als besonders vorteilhaft haben sich Erfassungssensoren auch erwiesen, um Fahrzeugkomponenten mit einzubeziehen, die bei einer Betätigung und/oder Berührung im normalen Betrieb kein auswertbares Signal erzeugen und/oder bereitstellen. Eine bevorzugte Ausführungsform sieht vor, dass der mindestens eine Erfassungssensor an einer Komponente und/oder einem Bedienelement des Kraftfahrzeugs angeordnet ist, bei dessen Betätigung oder Berührung kein Signal für eine Bedienung, Verwendung, Ausführung und/oder Bereitstellung eines Fahrzeugssystems, einer der Fahrzeugfunktionen und/oder eines der Dienste erzeugt wird. Beispielsweise kann ein solcher Erfassungssensor an einem Lüftungsgitter an einem Lüftungsauslass angeordnet sein. Berührt oder betätigt ein Nutzer dieses Lüftungsgitter, so wird im Informationsmodus ein Signal erzeugt, welches genutzt wird, um ein entsprechendes Fahrzeugsystem, hier eine Lüftungsanlage oder eine Klimaanlage, auszuwählen und diese zu erläutern. Ebenso wird eine solche Erläuterung Angaben über eine Bedienung und Handhabung des Lüftungsgitters selbst umfassen.

Als besonders vorteilhaft haben sich Erfassungssensoren erwiesen, die mehrere Komponenten und/oder Bedienelemente hinsichtlich einer Berührung überwachen können. Eine bevorzugte Ausführungsform der Erfindung sieht daher vor, dass der mindestens eine Erfassungssensor mit einer Auswerteeinheit eine eine Position eines Betätigungselementes, insbesondere eines Körperteils eines Nutzers, am Bevorzugtesten eines Fingers, im Raum bestimmende Positionsermittlungseinheit bildet. Solche, eine vorzugsweise dreidimensionale Position bestimmende, Positionsermittlungseinheiten sind im Stand der Technik bekannt. Beispielsweise kann eine Reflexion von vorzugsweise im infraroten Wellenlängenbereich ausgesandten Signalen ausgewertet werden. Alternativ können Systeme eingesetzt werden, die eine Beeinflussung von elektromagnetischen Feldern auswerten. Aus der WO 2004/078536 ist eine Einheit bekannt, die kapazitiv über einen Nutzer übertragene Hochfrequenzsignale bei einer Annäherung eines Körperteils an Erfassungssensoren zur Positionsermittlung auswertet.

Um die Erfindung insbesondere mit komplexen Fahrzeugsystemen und Bedienelementen verwenden zu können, die bei einer Betätigung und/oder Berührung durch den Nutzer ein oder mehrere Signale erzeugen, ist bei einer bevorzugten Ausführungsform vorgesehen, dass die Fahrzeugsysteme, Fahrzeugfunktionen und/oder Dienste mit der Steuereinrichtung informationstechnisch gekoppelt sind und die Steuereinrichtung den Fahrzeugsystemen, Fahrzeugfunktionen und/oder Diensten einen Betrieb im Informationsmodus signalisiert, wobei die Fahrzeugsysteme, Fahrzeugfunktionen und/oder Dienste ausgestaltet sind, dass sie, während der Betrieb im Informationsmodus signalisiert ist, Signale von Komponenten und Bedienelementen aufgrund von Berühr- oder Betätigungshandlungen nicht als Steuersignale interpretieren und, sofern diese Signale dem Steuergerät informationstechnisch nicht bereits übermittelt wurden, das Steuergerät über die erfasste Berühr- oder Betätigungshandlung informieren. Die einzelnen Fahrzeugsysteme, Fahrzeugfunktionen und Dienste sind somit so ausgestaltet, dass sie im Informationsmodus die für sie vorgesehenen Steuersignale nicht wie im normalen Betrieb auswerten. Vielmehr informieren sie lediglich die Steuereinrichtung des Informationssystems darüber, dass eine Berühr- oder Betätigungshandlung erfasst worden ist. Kann ein Bedienelement unterschiedliche Bediensignale erzeugen, so wird selbstverständlich auch die Art der Bedienung, d.h. die Art des Bediensignals, bei einer bevorzugten Ausführungsform an die Steuereinrichtung übermittelt.

Um einem Nutzer die Möglichkeit zu geben, sich beispielsweise auch über Fahrzeugsysteme, Fahrzeugfunktionen und/oder Dienste Informationen zu beschaffen, deren Bedienelemente und/oder Komponenten er nicht ohne weiteres berühren und/oder betätigen kann, sieht eine bevorzugte Ausführungsform der Erfindung vor, dass im Zusammenwirken der Steuereinrichtung oder einer weiteren Steuereinrichtung mit einer Anzeigevorrichtung eine grafische Benutzerschnittstelle umgesetzt ist, wobei die grafische Benutzerschnittstelle ausgestaltet ist, dass in einem grafischen Eingabemodus die Komponenten und die Bedienelemente des Kraftfahrzeugs auf der Anzeigefläche grafisch dargestellt sind, die für die Bedienung, Verwendung, Ausführung und/oder Bereitstellung eines der Fahrzeugsysteme, einer der Fahrzeugfunktionen und/oder eines der Dienste vorgesehen sind, und die Auswahl eines der Fahrzeugsysteme, einer der Fahrzeugfunktionen oder eines der Dienste vornehmbar ist, indem über die grafische Benutzerschnittstelle eine Entsprechende der grafisch dargestellten Komponenten oder ein Entsprechendes der grafisch dargestellten Bedienelemente ausgewählt wird. Die Informationseinrichtung umfasst somit eine grafische Benutzerschnittstelle, über die eine grafische Auswahl einer Komponente oder eines Bedienelements des Kraftfahrzeugs möglich ist, die bzw. das für eine Bedienung, Verwendung, Ausführung und/oder Bereitstellung eines der Fahrzeugsysteme, einer der Fahrzeugfunktionen und/oder eines der Dienste vorgesehen ist. Dies bedeutet, dass die dem Nutzer im Fahrzeug begegnenden realen Komponenten und Bedienelemente, mit denen der Nutzer im Betrieb des Fahrzeugs interagiert, in der grafischen Darstellung genutzt werden, um die hiermit verknüpften Fahrzeugsysteme, Fahrzeugfunktionen und/oder Dienste auszuwählen. Eine grafische Auswahl kann hierbei auf vielfältige Arten realisiert sein. Beispielsweise kann automatisch ein Fokus von einer Komponente bzw. einem Bedienelement zum nächsten bewegt werden. Der Fokus kann auf unterschiedliche Art und Weise grafisch dargestellt sein. Beispielsweise kann das mit dem Fokus versehene Bedienelement bzw. die mit dem Fokus versehene Komponente farblich hervorgehoben sein. Ist das Bedienelement bzw. die Komponente, über deren Bedienung der Nutzer Informationen erhalten möchte bzw. über deren hiermit verknüpftes Fahrzeugsystem, Fahrzeugfunktion oder Dienst der Nutzer Informationen erhalten möchte, mit dem Fokus versehen, so kann über eine Eingabe das entsprechende Bedienelement bzw. die entsprechende Komponente über das Betätigen einer Eingabevorrichtung der Benutzerschnittstelle grafisch ausgewählt werden. Als grafische Auswahl werden all jene Verfahren angesehen, bei denen ein Nutzer über eine Eingabevorrichtung eine grafisch dargestellte Komponente oder ein grafisch dargestelltes Bedienelement auswählen kann. Eine Informationseinrichtung und ein Verfahren zum Bereitstellen von Informationen, wie sie hier vorgeschlagen sind, bieten den Vorteil, dass der Nutzer keinerlei Kenntnisse über die Bezeichnung der einzelnen Fahrzeugsysteme, Fahrzeugfunktionen und/oder Dienste besitzen muss, um ein solches entsprechendes Fahrzeugsystem, eine Fahrzeugfunktion oder einen Dienst auszuwählen. Ferner ist eine solche Auswahl auch an einer realen Bediensituation orientiert. Möchte ein Kraftfahrzeugführer beispielsweise Informationen über die Funktionsweise seiner Klimaanlage erhalten, so wird er die grafische Darstellung eines Bedienfeldes der Klimaanlage auswählen. Um jedoch auch Informationen über Fahrzeugfunktionen, Fahrzeugsysteme und/oder Dienste zu erhalten, die entweder nicht direkt durch den Kraftfahrzeugführer bedient werden oder deren Bedienelemente er nicht kennt, ist es vorgesehen, auch Komponenten grafisch darzustellen, die an der Ausführung von Fahrzeugfunktionen und/oder einer Bereitstellung von Diensten beteiligt sind. Um beispielsweise eine Multifunktionsanzeige im Cockpit erläutert zu bekommen, muss ein Kraftfahrzeugführer somit nur die Darstellung dieser Multifunktionsanzeige grafisch auswählen.

Bei einer besonders bevorzugten Ausführungsform der Erfindung ist vorgesehen, dass mit der Anzeigevorrichtung die Positionsermittlungseinheit oder eine weiteren Positionsermittlungseinheit für eine Bedienung der grafischen Benutzerschnittstelle gekoppelt sind, über die eine Position auf der Anzeigefläche durch einen Nutzer festlegbar ist, wobei das Fahrzeugsystem, die Fahrzeugfunktion oder der Dienst ausgewählt sind, dessen oder deren Komponente oder Bedienelement an der festgelegten Position dargestellt ist. Eine auf diese Weise ausgestaltete Benutzerschnittstelle kann beispielsweise so ausgestaltet sein, dass ein Nutzer einen Zeiger auf der Anzeigefläche steuern kann. Befindet sich der Zeiger an der Position, an der das Bedienelement oder die Komponente dargestellt sind, die ausgewählt werden sollen, so kann ein Nutzer eine entsprechende Eingabe tätigen. Aus dem Stand der Technik ist eine Reihe von Eingabevorrichtungen (Bedienelementen) bekannt, um einen solchen Zeiger zu steuern. Diese umfassen beispielsweise Trackballs, Touchpads, Mäuse, Richtungstasten, Joysticks usw. Auch eine vor der Anzeigefläche angeordnete oder in die Anzeigefläche integrierte Positionsermittlungseinheit kann verwendet werden.

Somit werden Ausführungsformen bevorzugt, bei denen die Anzeigevorrichtung und die hiermit gekoppelte Positionsermittlungseinheit oder weitere Positionsermittlungseinheit als Touchscreen ausgebildet sind. Hierüber ist eine besonders einfache und intuitive Benutzung der grafischen Benutzerschnittstelle möglich.

Um eine Orientierung des Nutzers bei der Auswahl zu erleichtern, ist bei einer bevorzugten Ausführungsform vorgesehen, dass die Komponenten und Bedienelemente grafisch in ihrem verbauten und/oder verwendeten Zustand im Kraftfahrzeug, insbesondere fotorealistisch, gezeigt sind. Bei einer besonders bevorzugten Ausführungsform der Erfindung sind die Komponenten und Bedienelemente somit fotorealistisch dargestellt.

Um eine Informationsvermittlung in unterschiedlichen Detailtiefen zu ermöglichen, kann es vorteilhaft sein, Fahrzeugsysteme, Fahrzeugfunktionen und/oder Dienste zu einem übergeordneten Fahrzeugsystem, einer übergeordneten Funktion oder einem übergeordneten Dienst zusammenzufassen oder entsprechend in Untersysteme, Unterfunktionen oder Unterdienste zu unterteilen. Um eine Auswahl in unterschiedlichen Ebenen zu ermöglichen, kann die grafische Auswahl menüartig ausgestaltet sein. Dies bedeutet, dass nach Auswahl eines Fahrzeugsystems dieses oder dessen Bedienelemente und/oder genutzte Komponenten anschließend vergrößert auf der Anzeigefläche dargestellt sein können, um einzelne Untersysteme gezielt auswählen zu können, über die eine Informationsausgabe gewünscht wird. Wird beispielsweise in einer ersten Ansicht das gesamte Fahrzeugcockpit grafisch dargestellt, so kann es vorgesehen sein, dass die dort dargestellten Bedienelemente und Fahrzeugsysteme beispielsweise als Bedienfelder mit mehreren Bedienelementen oder Obersysteme betrachtet werden.

Um einem Nutzer zu ermöglichen festzustellen, über welche dargestellten Komponenten und Bedienelemente Informationen verfügbar sind, ist daher bei einer bevorzugten Ausführungsform vorgesehen, dass die Komponenten und Bedienelemente, die für eine Bedienung, Verwendung, Ausführung und/oder Bereitstellung eines der Fahrzeugsysteme, einer der Fahrzeugfunktionen und/oder eines der Dienste vorgesehen sind, und über das oder die ausgebbare Informationen in der Speichervorrichtung abgelegt sind, grafisch hervorgehoben, insbesondere farblich hervorgehoben, dargestellt sind.

In einigen Fällen wird ein Nutzer jedoch nicht genau wissen, über welches Bedienelement eine Fahrzeugfunktion ausgelöst werden kann und/oder welche Komponente für die Bereitstellung der Funktion verwendet wird. In einem solchen Fall ist es hilfreich, wenn der Nutzer zusätzlich die Möglichkeit hat, die Funktion über einen Begriff auszuwählen. Daher ist bei einer bevorzugten Ausführungsform vorgesehen, dass ein Begriff-Eingabemodus vorgesehen ist, in dem eines der Fahrzeugsysteme, eine der Fahrzeugfunktionen und/oder einer der Dienste mittels einer Begriffserfassung und eines Vergleichs des mindestens einen erfassten Begriffs mit Bezeichnungen der Fahrzeugsysteme, Fahrzeugfunktionen und/oder Dienste auswählbar sind. Hierbei kann vorgesehen sein, dass die Begriffserfassung mittels einer Spracherkennungseinheit erfolgt. Ebenso ist es möglich, dass bei der Begriffserfassung alphanumerische Zeichen mittels der grafischen Benutzerschnittstelle erfasst werden.

Ferner gibt es Situationen, in denen der Nutzer zwar die Begrifflichkeit nicht genau kennt, diese jedoch aus einer angebotenen Anzahl von Begrifflichkeiten auswählen könnte. Daher sieht eine Ausführungsform der Erfindung vor, dass die Benutzerschnittstelle so ausgestaltet ist, dass in einem Menü-Eingabemodus eines der Fahrzeugsysteme, eine der Fahrzeugfunktionen und/oder einer der Dienste über auf der Anzeigefläche dargestellte Menüs auswählbar sind, die alphanumerische Einträge umfassen und vorzugsweise listenartig ausgestaltet sind.

Die Merkmale der Weiterbildungen des erfindungsgemäßen Verfahrens weisen dieselben Vorteile wie die entsprechenden Merkmale des Informationssystems auf.

Nachfolgend wird die Erfindung anhand bevorzugter Ausführungsbeispiele näher erläutert. Hierbei zeigen:
- Fig. 1: ein schematisches Flussdiagramm eines Verfahrens zum Bereitstellen von Informationen;
- Fig. 2: eine schematische Darstellung einer Ausführungsform eines Informationssystems;
- Fig. 3: eine schematische Darstellung eines Kraftfahrzeugs, in dem ein Informationssystem umgesetzt ist;
- Fig. 4: eine Multifunktionsbedienvorrichtung, in die ein Informationssystem integriert ist;
- Fig. 5: eine beispielhafte Ausgestaltung einer Benutzerschnittstelle eines Informationssystems;
- Fig. 6a, 6b: eine weitere Ausführungsform einer Benutzerschnittstelle eines Informationssystems; und
- Fig. 7a - 7g: Ausschnitte einer filmischen Informationswiedergabe, die exemplarisch Informationen über eine Geschwindigkeitsregelanlage bereitstellt.

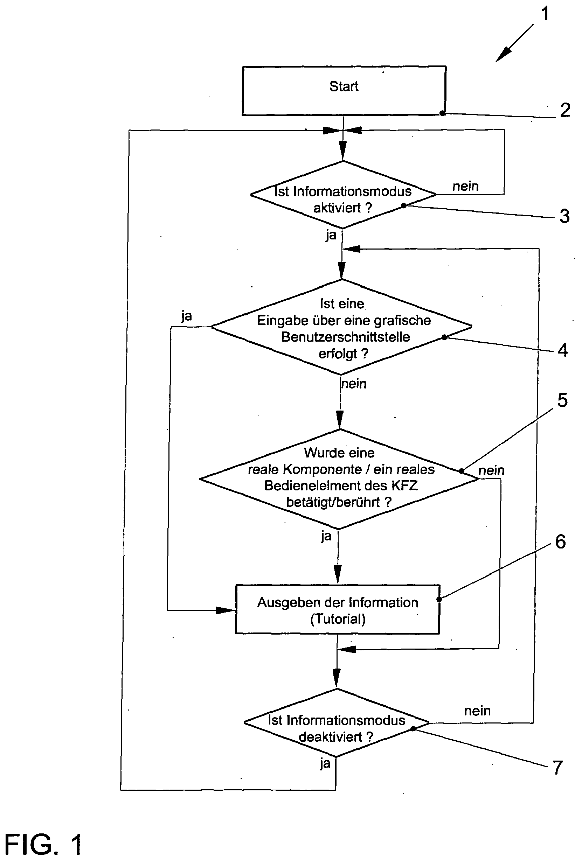

In Fig. 1 ist schematisch ein Flussdiagramm eines Verfahrens 1 zum Bereitstellen von Informationen in einem Kraftfahrzeug dargestellt. Zunächst wird das Verfahren gestartet 2. Anschließend wird überprüft, ob ein Informationsmodus aktiviert ist 3. Ist dies nicht der Fall, so wird die Abfrage wiederholt. Ist der Informationsmodus aktiviert, so wird überprüft, ob über eine grafische Benutzerschnittstelle eine Nutzerauswahleingabe erfolgt ist 4. Diese kann, wie unten erläutert wird, auf unterschiedliche Weise vorgenommen werden. Wurde keine Nutzerauswahleingabe über die grafische Benutzerschnittstelle (GUI) vorgenommen, so wird eine weitere Abfrage ausgeführt, ob eine reale Komponente, oder ein reales Bedienelement des Kraftfahrzeugs berührt oder betätigt wurde 5. Ist dies der Fall, so wird die Berühr- oder Betätigungshandlung als Nutzerauswahleingabe aufgefasst. Über die entsprechende Komponente oder das entsprechende Bedienelement wird das Fahrzeugsystem, die Fahrzeugfunktion oder der Dienst ausgewählt, der über das entsprechende Bedienelement oder die entsprechende Komponente bedient, ausgeführt und/oder bereitgestellt wird. Die Ausgabe der Information 6 erfolgt ebenso, wenn eine Nutzerauswahleingabe über die grafische Benutzerschnittstelle erfolgt ist. Es versteht sich, dass die Komponente oder das Bedienelement ebenfalls zu dem Fahrzeugsystem, der Fahrzeugfunktion oder dem Dienst zugehörig sind, so dass Informationen über diese Komponente oder dieses Bedienelement in der Regel mit ausgegeben werden. Nach dem Ausgeben der Information wird überprüft, ob der Informationsmodus deaktiviert ist 7. Ist der Informationsmodus nicht deaktiviert, wird das Verfahren mit der Abfrage fortgesetzt, ob eine Eingabe über die grafische Benutzerschnittstelle (GUI) erfolgt ist 4. Ist der Informationsmodus deaktiviert, wird das Verfahren mit der Abfrage fortgesetzt, ob der Informationsmodus aktiviert ist 3. Das Verfahren ist somit vorzugsweise immer dann aktiv, wenn das Fahrzeug von einem Nutzer benutzt wird.

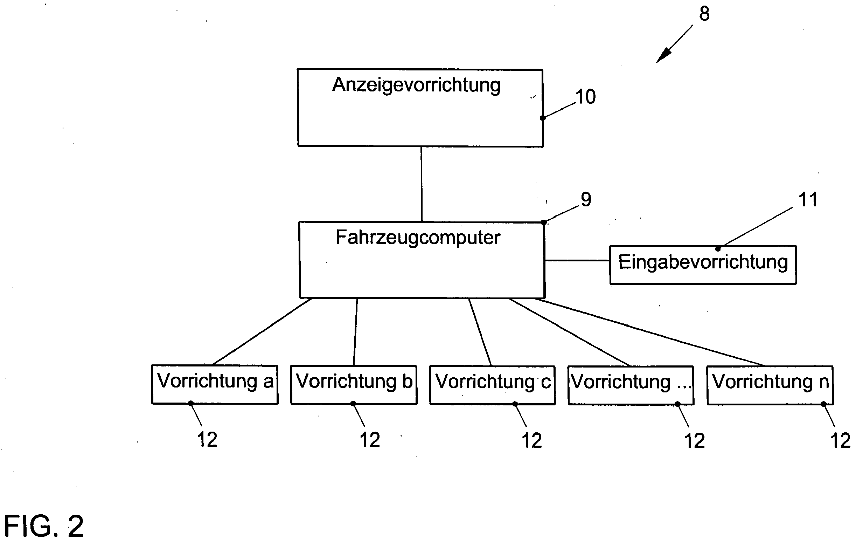

In Fig. 2 ist ein Informationssystem 8 sehr grob schematisch skizziert. Kern des Informationssystems 8 ist ein Fahrzeugcomputer 9. Dieser umfasst in der Regel eine programmgesteuerte Recheneinheit und mindestens eine Speichervorrichtung. Die programmgesteuerte Recheneinheit stellt eine Steuereinheit dar. Der Fahrzeugcomputer 9 ist mit einer Anzeigevorrichtung 10 gekoppelt. Der Fahrzeugcomputer steuert die Darstellung von Informationen auf der Anzeigevorrichtung 10. Die Anzeigevorrichtung 10 dient somit als Ausgabeeinrichtung. Der Fahrzeugcomputer 9 ist ferner mit einer Eingabevorrichtung 11 verbunden. Über die Eingabevorrichtung 11 können Nutzereingaben erfasst werden. Im Zusammenwirken mit der Eingabevorrichtung 11 und der Anzeigevorrichtung 10 kann der Fahrzeugcomputer 9 eine grafische Benutzerschnittstelle umsetzen. Mittels des Fahrzeugcomputers 9, der Anzeigevorrichtung 10 und der Eingabevorrichtung 11 wird ein Verfahren zum Bereitstellen von Informationen umgesetzt, wie es oben mit Bezug auf Fig. 1 grob erläutert wurde. Über die Eingabevorrichtung 11 kann somit die Aktivierung des Informationsmodus erfasst werden. Der Fahrzeugcomputer 9 ist ferner mit Vorrichtungen 12 informationstechnisch gekoppelt. Die Vorrichtungen können als Komponenten und/oder Bedienelemente, als Fahrzeugsysteme, Fahrzeugfunktionen und/oder Dienste ausgebildet sein. Eine Unterscheidung der Begriffe Fahrzeugsysteme, Fahrzeugfunktionen und Dienste ist im Hinblick auf die hier beschriebene Erfindung nicht wesentlich. Eine Abgrenzung ist häufig nicht genau möglich. Das Regeln einer Fahrzeuggeschwindigkeit kann beispielsweise als Fahrzeugfunktion aufgefasst werden. Ebenso kann es jedoch als eine von einer Geschwindigkeitsregelanlage, die wiederum als Fahrzeugsystem aufgefasst werden kann, bereitgestellte Funktionalität betrachtet werden. Unter einem Dienst können auch solche Anwendungen verstanden werden, die mittels mit dem Kraftfahrzeug gekoppelter Komponenten bereitgestellt werden. Beispielsweise kann ein über ein Mobiltelefon zur Verfügung gestellter Informationsdienst, der über in einer Umgebung des Kraftfahrzeugs befindliche Tankstellen, Hotels, Restaurants etc. informiert, als ein Dienst angesehen werden.

Wird im Informationsmodus eine der Vorrichtungen 12 berührt und/oder betätigt, so gibt der Fahrzeugcomputer 9 Informationen über die entsprechende Vorrichtung 12 oder ein hierüber bedientes Fahrzeugsystem oder eine entsprechende Fahrzeugkomponente aus, die zur Ausführung und/oder Bereitstellung der Fahrzeugfunktion oder eines Dienstes verwendet wird.

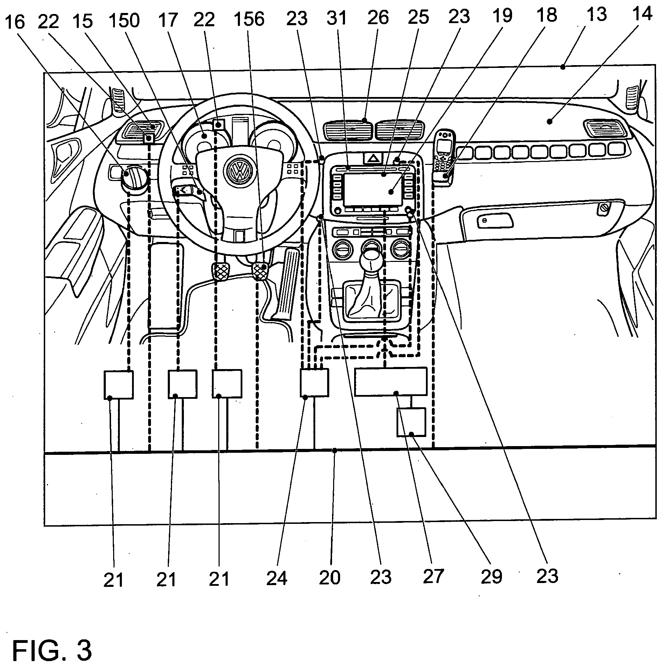

In Fig. 3 ist schematisch ein Kraftfahrzeug 13 dargestellt, in dem ein Informationssystem umgesetzt ist. Das Kraftfahrzeug 13 umfasst ein Cockpit 14. In dem Cockpit 14 sind eine Vielzahl von Komponenten und Bedienelementen des Fahrzeugs angeordnet. Diese umfassen beispielsweise u.a. ein Luftauslassgitter 15, einen Drehwahlschalter 16, einen an einer Lenksäule angeordneten Bedienhebel 150, eine als so genanntes Kombiinstrument ausgebildete Multifunktionsanzeige 17, ein Bremspedal 156, eine Multifunktionsbedienvorrichtung 31 und eine mit einem Mobiltelefon verbundene Mobiltelefonaufnahme 18, um einige zu erwähnen. Mit der Multifunktionsbedienvorrichtung 31 ist eine Steuereinrichtung 27 verbunden. Diese steuert die grafische Anzeige einer Anzeigevorrichtung 25 der Multifunktionsbedienvorrichtung 31. In einer Speichervorrichtung 29 sind Daten als Programmcode abgelegt, die im Zusammenwirken der Steuereinrichtung 27 mit der Anzeigevorrichtung 25 eine grafische Benutzerschnittstelle umsetzen. Hierzu kann in einem grafischen Eingabemodus auf einer Anzeigefläche 19 der Anzeigevorrichtung 25 eine grafische Ansicht des Cockpits 14 dargestellt werden. Die Anzeigevorrichtung 25 ist vorzugsweise als Touchscreen ausgebildet, so dass eine Benutzereingabe als Nutzerauswahleingabe über die Multifunktionsbedienvorrichtung 31 mittels eines Berührens der Anzeigefläche 19 möglich ist. Zur Bedienung der grafischen Benutzerschnittstelle können jedoch auch Bedienelemente der Multifunktionsbedienvorrichtung 31 verwendet werden, die weiter unten ausführlicher erläutert wird. Mittels der Steuereinrichtung 27 und des in der Speichervorrichtung 29 gespeicherten Programmcodes wird ein Verfahren zum Bereitstellen von Informationen für Fahrzeugsysteme, Fahrzeugfunktionen und/oder Dienste ausgeführt. Um ein Fahrzeugsystem, eine Fahrzeugfunktion und/oder einen Dienst auswählen zu können, kann ein Informationsmodus aktiviert werden. Eine diesbezügliche Nutzereingabe kann beispielsweise über die Multifunktionsbedienvorrichtung 31 erfolgen. Im Informationsmodus ist es ausreichend, eines der Bedienelemente oder eine der Komponenten des Kraftfahrzeugs zu berühren oder zu betätigen, um ein entsprechendes Fahrzeugsystem, eine entsprechende Fahrzeugfunktion und/oder einen Dienst auszuwählen, die mit dem entsprechenden Bedienelement oder der Komponente bedient bzw. ausgeführt oder bereitgestellt werden. Die einzelnen Komponenten und/oder Bedienelemente sind hierfür entweder direkt über einen Fahrzeugbus 20 oder Steuergeräte 21 informationstechnisch mit der Steuereinrichtung 27 verbunden. Der Drehwahischalter 16, über den beispielsweise eine Beleuchtungsanlage des Kraftfahrzeugs 13 bedient werden kann, ist beispielsweise mit einem der Steuergeräte 21 verbunden. Die Steuergeräte 21 sind so betreibbar, dass sie im Informationsmodus, der den Steuergeräten 21 durch die Steuereinrichtung 27 signalisiert wird, die von den Komponenten und Bedienelementen, hier beispielsweise des Drehwahlschalters 16, bei einer Berührung oder Betätigung erzeugten Signale nicht als Bediensignale interpretieren. Vielmehr informieren sie die Steuereinrichtung 27 über den Fahrzeugbus 20 über die erfolgte Berührung oder Betätigung, hier beispielsweise des Drehwahlschalters 16. Die Steuereinrichtung 27 wählt anhand dieser Information das Fahrzeugsystem, die Fahrzeugfunktion oder den Dienst aus, über den der Nutzer Informationen ausgegeben erhalten möchte. Diese werden zumindest zum Teil aus der Speichervorrichtung 29 ausgelesen und über eine Ausgabeeinrichtung, beispielsweise die Multifunktionsbedienvorrichtung 31, auf dessen Anzeigevorrichtung 25 ausgegeben. Vorzugsweise erfolgt die Ausgabe multimedial, d.h. unter Verwendung mehrerer Informationsmedien. Hierbei kann beispielsweise eine grafische Ausgabe über die Multifunktionsbedienvorrichtung 31 und/oder über ein Audiosystem (nicht explizit dargestellt) erfolgen. Die Ausgabe erfolgt vorzugsweise animiert, beispielsweise filmisch. Hierzu kann ein künstlicher Charakter, ein so genannter Avatar, unterstützend herangezogen werden. Eine solche animierte Ausgabe der Informationen ist unten beispielhaft erläutert.

Um auch eine Auswahl von Fahrzeugsystemen, Fahrzeugfunktionen und/oder Diensten über Komponenten und/oder Bedienelemente zu ermöglichen, die im normalen Fahrzeugbetrieb nicht für eine Bedien- oder Betätigungshandlung vorgesehen sind und/oder bei einer Berührung und/oder Betätigung im normalen Fahrzeugbetrieb keine informationstechnisch auswertbaren Signale erzeugen, ist es vorgesehen, diese Komponenten und/oder Bedienelemente mit Erfassungssensoren 22 zu koppeln. Beispielsweise ist an dem Luftauslassgitter 15 einer der Erfassungssensoren 22 angeordnet. Bei einem Berühren oder Betätigen des Luftauslassgitters 15 im Informationsmodus wird somit ein von dem Entsprechenden der Erfassungssensoren 22 erzeugtes Signal, hier direkt über den Fahrzeugbus 20, an die Steuereinrichtung 27 übermittelt. Die Steuereinrichtung 27 kann somit Informationen über die Bedienung des Luftauslassgitters 15 sowie das dazugehörige Fahrzeugsystem Klima- und Belüftungsanlage ausgeben. Ein weiterer der Erfassungssensoren 22 ist an der Multifunktionsanzeige 17, die als Kombiinstrument augbebildet ist, angeordnet. Ein Berühren oder gegebenenfalls Annähern eines Körperteils an die Multifunktionsanzeige 17 erzeugt ein Signal, das im Informationsmodus mittels eines der Steuergeräte 21 ausgewertet wird. Eine Information hierüber wird über den Fahrzeugbus 20 an die Steuereinrichtung 27 übermittelt. Anschießend erfolgt somit eine Ausgabe von Informationen, die die Multifunktionsanzeige 17 erläutern.

Bei der in Fig. 3 dargestellten Ausführungsform eines Kraftfahrzeugs 13 sind benachbart zu der Multifunktionsbedienvorrichtung 31 weitere Erfassungssensoren 23 angeordnet. Diese sind mit einer Auswerteeinheit 24 verbunden und bilden gemeinsam eine Positionsermittlungseinheit. Die Positionsermittlungseinheit ist vorzugsweise so ausgebildet, dass sie berührungslos eine Position eines Körperteils im Raum dreidimensional ermitteln kann. Hierdurch wird es insbesondere möglich, mittels der Positionsermittlungseinheit eine Berührung und/oder Betätigung einer Vielzahl von Komponenten und Bedienelementen zu erfassen. Es ist somit nur eine geringe Anzahl von weiteren Erfassungssensoren notwendig, um eine Vielzahl von Komponenten und Bedienelementen im Informationsmodus auf eine Berührung und/oder Betätigung zu überwachen. Beispielsweise kann über die Positionsermittlungseinheit eine Berührung eines weiteren Luftauslassgitters 26 erfasst werden. Die Positionsermittlungseinheit kann auch verwendet werden, um eine Berührposition eines Körperteils auf der Anzeigefläche 19 zu ermitteln und hierüber die grafische Benutzerschnittstelle zu steuern. Ist die Anzeigevorrichtung 25 als Touchscreen ausgebildet, so ist hierin eine weitere Positionsermittlungseinheit integriert, die für eine Bedienung der grafischen Benutzerschnittstelle mittels Berührhandlungen genutzt werden kann.

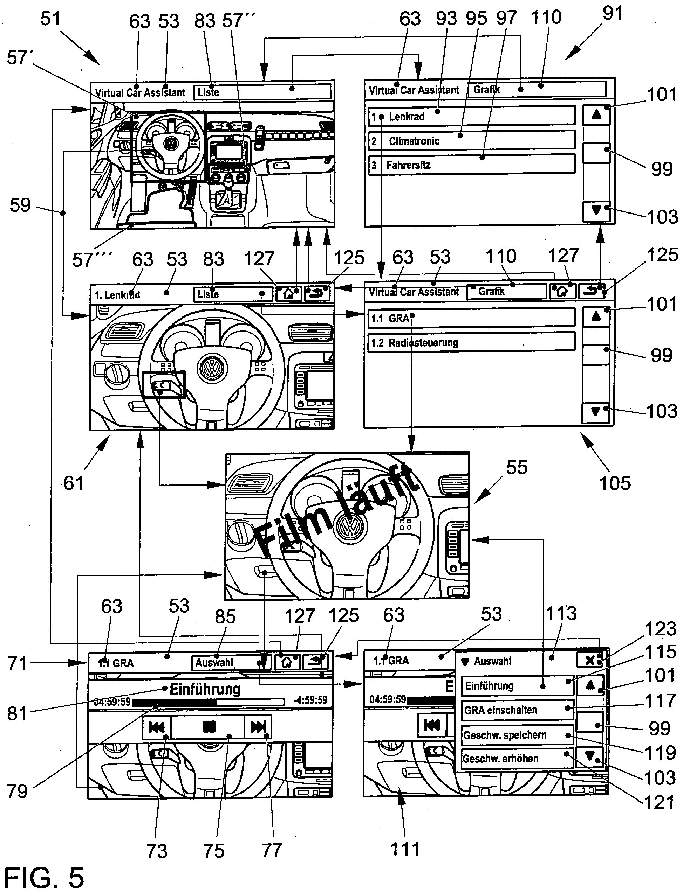

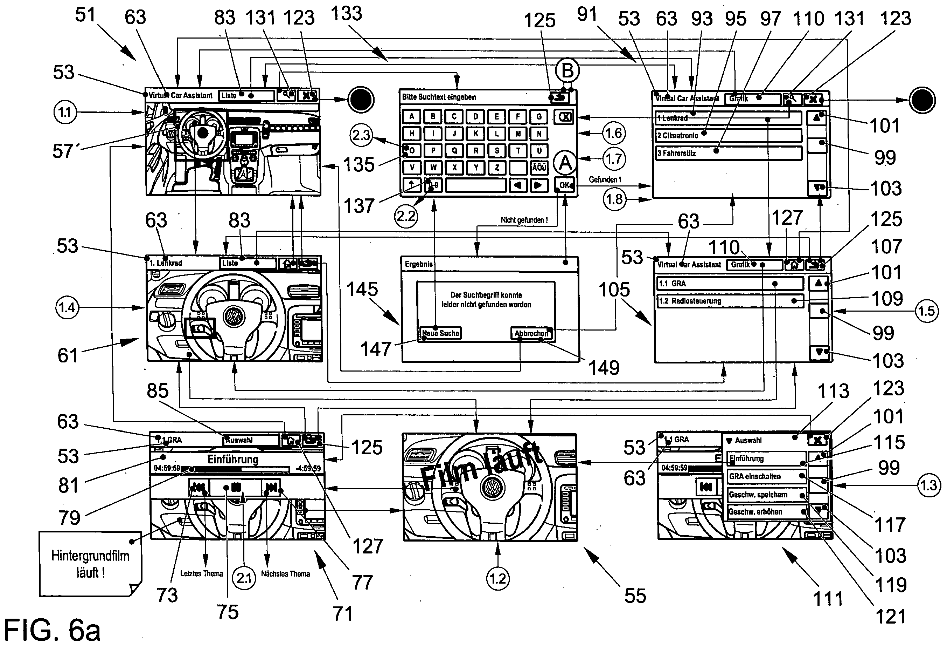

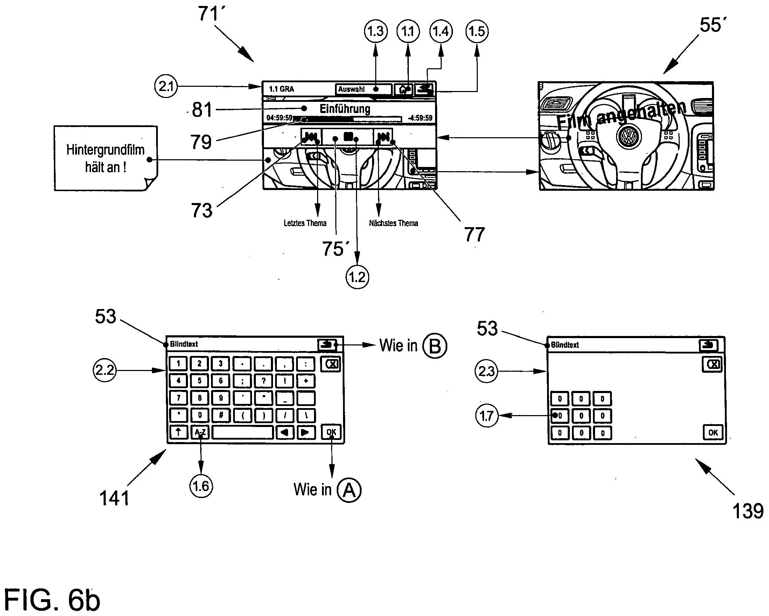

Alternativ zu einer Berührung oder Betätigung der Komponenten und/oder Bedienelemente des Kraftfahrzeugs, ist eine Auswahl des Fahrzeugsystems, der Fahrzeugfunktion und/oder des Dienstes, über die eine Informationsausgabe gewünscht wird, über eine Nutzerauswahleingabe mittels einer grafischen Benutzerschnittstelle möglich. Dieses wird im Folgenden, insbesondere im Zusammenhang mit Fig. 5 und Fig. 6a und 6b je erläutert.

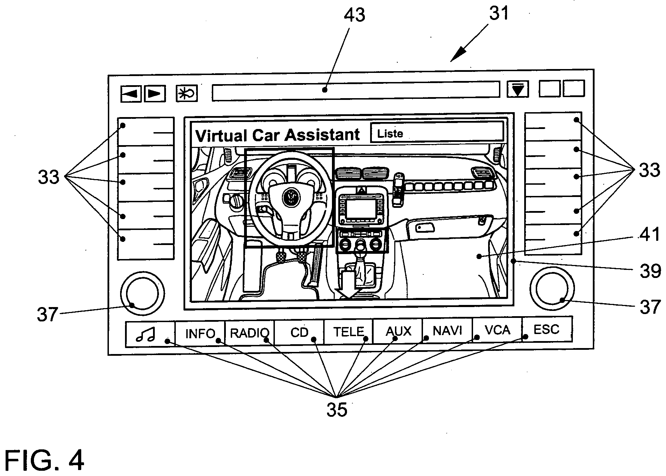

Unter Bezugnahme auf Fig. 4 wird jedoch zunächst eine Multifunktionsbedienvorrichtung 31 einer möglichen Ausführungsform eines Informationssystems näher erläutert.

In Fig. 4 ist eine Multifunktionsbedienvorrichtung 31 dargestellt, in die die zur Umsetzung benötigte Hardware eines Informationssystems integriert ist. Über die Multifunktionsbedienvorrichtung 31 sind Fahrzeugsysteme, beispielsweise eine Klimaanlage, Fahrzeugfunktionen, beispielsweise eine Geschwindigkeitsregelung, und/oder Dienste, beispielsweise ein Telematikdienst, bedien- und steuerbar. Eine Abgrenzung der Begriffe Fahrzeugsystem, Fahrzeugfunktion und Dienst ist nur schwierig möglich und im Zusammenhang mit der Ausführung der beschriebenen Erfindung in allen hierin erwähnten Ausführungsformen nicht wesentlich. Die dargestellte Multifunktionsbedienvorrichtung 31 umfasst als Tasten ausgebildete frei programmierbare Bedienelemente 33 und mit einer festen Funktion versehene Bedienelemente 35. Ferner umfasst die Multifunktionsbedienvorrichtung 31 zwei Drehdrückknöpfe 37 zum Erfassen weiterer Nutzereingaben. Eine Anzeigevorrichtung 39 ist als Touchscreen ausgebildet, so dass auch über eine Berührung einer Anzeigefläche 41 der Anzeigevorrichtung 39 eine Benutzereingabe (beispielsweise eine Nutzerauswahleingabe) erfassbar ist. Die Informationen über die unterschiedlichen Fahrzeugsysteme, Fahrzeugfunktionen und/oder Dienste sowie die notwendigen Instruktionen, mittels denen eine Steuereinrichtung der Multifunktionsbedienvorrichtung 31 eine Informationseinrichtung mit einer grafischen Benutzerschnittstelle umsetzen kann, sind beispielsweise auf einer DVD abgespeichert, die über einen in die Multifunktionsbedienvorrichtung 31 integrierten DVD-Player ausgelesen werden können. Eine solche DVD wird beispielesweise in einen Einführschlitz 43 eingeführt. Beispielsweise über eine Autostartfunktion des DVD-Players wird dann programmgesteuert eine Benutzerschnittstelle gestartet, über die ein Fahrzeugsystem, eine Fahrzeugfunktion und/oder ein Dienst ausgewählt werden können, über welches dann zumindest ein Teil der gespeicherten Informationen vorzugsweise über die Anzeigevorrichtung wiedergegeben wird.

Anhand von Fig. 5 soll eine beispielhafte Ausgestaltung einer Benutzerschnittstelle eines Informationssystems erläutert werden. Dargestellt sind unterschiedliche Ansichten der Anzeigefläche einer Anzeigevorrichtung, die als Touchscreen ausgebildet ist. Über einzelne Pfeile, die jeweils von einem Kreis in einer der Ansichten zu einer der anderen Ansichten weisen, ist die logische Struktur der Benutzerschnittstelle wiedergegeben. Eine Berührung der Anzeigefläche an der Position, an der der Kreis dargestellt ist, bewirkt einen Übergang zu der Ansicht, auf die der Pfeil zeigt. Das Informationssystem, zu dem die in Fig. 3 dargestellte Benutzerschnittstelle gehört, wird auch als Virtual-Car-Assistant (virtueller Fahrzeugassistent) bezeichnet. Wenn das Informationssystem im grafischen Eingabemodus in Betrieb genommen wird, so erhält man die grafische Hauptansicht 51. Die Ansichten weisen jeweils in einem Eingabe- oder Bedienmodus eine Kopfleiste 53 auf. In einem Wiedergabemodus, der in einer Informationswiedergabeansicht 55 dargestellt ist, wird vorzugsweise die gesamte Anzeigefläche zur Wiedergabe von Informationen verwendet. In der Hauptansicht 51 ist ein Fahrzeuginnenraum fotorealistisch grafisch dargestellt. Einzelne Fahrzeugkomponenten und Bedienelemente sind grafisch hervorgehoben. Im dargestellten Ausführungsbeispiel sind dies exemplarisch ein Lenkrad 57', eine als Klimatronik bezeichnete Klimaanlage 57" und ein Fahrersitz 57"'. In anderen Ausführungsbeispielen können mehr oder weniger Komponenten und/oder Bedienelemente in der Hauptansicht grafisch hervorgehoben sein. Ferner können grafische Elemente dargestellt werden, die ein Navigieren zwischen unterschiedlichen Innen- und/oder Außenansichten des Kraftfahrzeugs ermöglichen, so dass unterschiedliche Fahrzeugkomponenten und Bedienelemente vorzugsweise in ihrem verbauten oder verwendeten Zustand dargestellt werden können. Über eine Berührung einer der grafisch hervorgehobenen Komponenten oder Bedienelemente 57, beispielsweise eine Berührung des Lenkrads 57', gelangt der Nutzer, wie mittels eines Pfeils 59 angedeutet ist, zu einer grafischen Unteransicht 61. Um einem Nutzer eine Orientierung innerhalb der grafischen Benutzerschnittstelle zu erleichtern, ist in der Kopfleiste 53 jeweils eine Bezeichnung 63 der jeweiligen Ansicht angegeben. In der Unteransicht 61 ist das Lenkrad gemeinsam mit daran angeordneten Bedienelementgruppen 65 und einem Bedienhebel 67 grafisch hervorgehoben. Berührt der Benutzer die grafische Darstellung des Bedienhebels 67, so gelangt er zur Informationswiedergabeansicht 55. Filmisch animiert wird die Funktionsweise der Geschwindigkeitsregelanlage erläutert, die mittels des Bedienhebels 67 bedient wird. Berührt der Benutzer die Anzeigefläche während der Informationswiedergabe, so gelangt er zu einer Ansicht 71, die der Unteransicht 61 gleicht, in der jedoch Wiedergabebedienelemente 73 bis 77 sowie ein Verlaufbalken 79 und eine Kapitelbezeichnung 81 dargestellt sind. Mittels des Wiedergabebedienelements "Kapitel zurück" 73 kann ein Kapitel zurückgesprungen werden und mittels des Wiedergabebedienelements "Kapitel vor" 77 zum nächsten Kapitel der aktuellen Informationswiedergabe gesprungen werden. Mittels des als Pausetaste ausgebildeten Wiedergabebedienelements "Pause" 75 kann die im Hintergrund fortgesetzte Informationswiedergabe unterbrochen werden.

Die grafische Hauptansicht 51, die Unteransicht 61 und die Ansicht 71 sind Ansichten der Benutzerschnittstelle im grafischen Eingabemodus, der primär für eine Nutzerauswahleingabe über die grafische Benutzerschnittstelle vorgesehen ist. Alternativ kann der Nutzer jedoch eine menüorientierte Eingabe wählen. Hierfür ist in der grafischen Hauptansicht 51 und der Unteransicht 61 jeweils in der Kopfleiste 53 ein Bedienelement "Liste" 83 sowie in der Ansicht 63 ein Klappleistenbedienelement "Auswahl" 85 zur Auswahl vorgesehen. Betätigt man das Bedienelement "Liste" 83 in der grafischen Hauptansicht 51, so gelangt man zur Menühauptansicht 91. Das Menü ist listenartig ausgestaltet und umfasst Einträge "1 Lenkrad" 93, "2 Klimatronik" 95 und "3 Fahrersitz" 97. Diese Einträge weisen alphanumerische Bezeichnungen auf. Die als virtuelle Bedienelemente ausgebildeten Listeneinträge 93 bis 97 korrespondieren mit den grafisch hervorgehobenen Komponenten und Bedienelementen 57' bis 57"'. Um in einer umfangreicheren Liste navigieren zu können, ist an einem rechten Rand ein Rollbalken 99 mit Aufwärts- und Abwärtstasten 101 bzw. 103 angeordnet.

Bei einer Betätigung des Listeneintrags "1 Lenkrad" 93 gelangt der Nutzer zu einer Menüunteransicht 105, die mit der grafischen Unteransicht 61 korrespondiert. In der Menüunteransicht 105 existieren weitere Listeneinträge "1.1. GRA (Geschwindigkeitsregelanlage)" 107 und "1.2. Radiosteuerung" 109. Wird der weitere Listeneintrag "1.1. GRA" 107 berührt, so gelangt man zur Informationswiedergabeansicht 55.

Die Menühauptansicht 99 und die Menüunteransicht 105 weisen jeweils ein Bedienelement "Grafik" 110 in der Kopfleiste 53 auf. Wird dieses betätigt, so gelangt man in die korrespondierende grafische Hauptansicht 51 bzw. Unteransicht 61.

Wird in der Ansicht 71 das Klappleistenelement "Auswahl" 85 betätigt, so gelangt man zur Auswahlansicht 111. In der Auswahlansicht 111 werden in einer Klappleiste 113 Klappleisteneinträge "Einführung" 115, "GRA einschalten" 117, "Geschwindigkeit speichern" 119 und "Geschwindigkeit erhöhen" 121 eingeblendet. Die Klappleiste 113 umfasst ebenfalls einen Rollbalken 99 mit Aufwärtstaste 101 und Abwärtstaste 103. Die Klappleisteneinträge 115 bis 121 korrespondieren mit Kapiteln der Informationswiedergabe. Über eine Abbruchtaste 123 der Klappleiste 113 gelangt man zurück zur Ansicht 71. Wird hingegen ein Klappleisteneintrag, beispielsweise "Einführung" 115 betätigt, so gelangt man zu einer entsprechenden Stelle in der Informationswiedergabe und erhält die Informationswiedergabeansicht 55.

Die untergeordneten Menüebenen sowohl im grafischen Eingabemodus als auch im Menüeingabemodus weisen jeweils eine Rücksprungtaste 125 und eine so genannte "Home-(Ausgangs-)taste" 127 auf. Bei einem Betätigen der Hometaste 127 gelangt man zur grafischen Hauptansicht 51. Eine Betätigung der Rücksprungtaste 125 führt jeweils dazu, dass man zu der nächst höher liegenden Ebene im jeweiligen Eingabemodus gelangt.

In Fig. 6a und 6b sind die Ansichten einer erweiterten Ausführungsform einer grafischen Benutzerschnittstelle eines Informationssystems dargestellt. Die Ausführungsform nach Fig. 6a und 6b unterscheiden sich von der Ausführungsform nach Fig. 5 dadurch, dass in der Kopfleiste 53 der grafischen Hauptansicht 51 und der Menühauptansicht 91 jeweils zusätzlich eine Suchtaste 131 vorgesehen ist. Über eine Betätigung der Suchtaste 131 gelangt ein Nutzer zu einer Tastaturansicht 133, in der eine Tastatur dargestellt ist. Mittels dieser kann ein Suchbegriff eingegeben werden. Beim Betätigen einzelner Tasten, beispielsweise einer "O"-Taste 135 oder einer "0-9"-Taste 137, gelangt man zu entsprechenden Untertastaturansichten 139 bzw. 141. Mittels der in der Tastaturansicht 133 bzw. den Tastaturunteransichten 139 und 141 dargestellten Tasten ist es möglich, einen oder mehrere Begriffe einzugeben. Betätigt man eine "OK"-Taste 143, so werden der oder die eingegebenen Begriffe mit gespeicherten Bezeichnungen von Fahrzeugsystemen, Fahrzeugfunktionen und/oder Diensten verglichen. Anschließend werden die grafische Unteransicht 61 oder die Menüunteransicht 105 angezeigt, in der entweder die Komponente und/oder das Bedienelement dargestellt sind, die zur Bedienung, Ausführung, Verwendung und/oder Bereitstellung des entsprechenden Fahrzeugsystems, der entsprechenden Fahrzeugfunktion oder des entsprechenden Dienstes verwendet werden, oder der entsprechende Listeneintrag enthalten ist. Der entsprechende Listeneintrag bzw. das entsprechende Bedienelement oder die entsprechende Komponente sind grafisch so hervorgehoben, dass eine Informationswiedergabe durch eine Betätigung durch den Nutzer leicht ausgelöst werden kann. Bei einer alternativen Ausführungsform kann vorgesehen sein, dass direkt die Informationswiedergabe bei einer Übereinstimmung (oder großen Ähnlichkeit) des erfassten Begriffs mit einer der Bezeichnungen ausgelöst wird.

Wird bei der Suche keine Übereinstimmung gefunden, so gelangt der Nutzer zu einer Suchergebnisansicht 145. In der Suchergebnisansicht 145 wird dem Nutzer mitgeteilt, dass die Suche erfolglos war. Über ein Bedienelement "neue Suche" 147 kann er zu der Tastaturansicht 133 zurückkehren. Über eine Abbruchtaste 149 kann er zu der entsprechenden Hauptansicht 51 oder 91 zurückkehren. Alternativ oder zusätzlich kann eine Spracherkennungseinheit vorgesehen sein, über die ebenfalls Begriffe erfasst werden, die dann anschließend mit Bezeichnungen verglichen werden. Wird eine Übereinstimmung festgestellt, so wird entweder sofort mit der Informationswiedergabe in der Informationswiedergabeansicht 55 fortgefahren oder die entsprechende grafische Ansicht bzw. die entsprechende Menüansicht angezeigt. Für die einzelnen Fahrzeugsysteme, Fahrzeugfunktionen und/oder Dienste können mehrere Bezeichnungen vorhanden sein. Beim Vergleichen kann auch ein Ähnlichkeitsabgleich ausgeführt werden.

Die Ausführungsform nach Fig. 6a und 6b unterscheiden sich von der nach Fig. 5 auch dadurch, dass ausgeführt ist, wie sich die Benutzerschnittstelle bei einem Betätigen des Wiedergabebedienelements "Pause" 75 in der Ansicht 71 verhält. Man gelangt zu einer korrespondierenden Ansicht 71'. In dieser ist das Wiedergabebedienelement "Pause" 75 durch ein Wiedergabebedienelement "Abspielen" 75' ersetzt. Ferner erkennt man, dass man durch eine Berührung der Anzeigefläche in einem unteren Bereich der korrespondierenden Ansicht 71' zu einer korrespondierenden Informationswiedergabeansicht 55' gelangt. Diese korrespondiert mit der Informationswiedergabeansicht 55. In der korrespondierenden Informationswiedergabeansicht 55' ist die filmische Informationswiedergabe angehalten. Berührt man in der korrespondierenden Informationswiedergabeansicht 55' die Anzeigefläche gelangt man zurück zur korrespondierenden Ansicht 71' und über ein Betätigen des Wiedergabebedienelements "Abspielen" 75' zu der Informationswiedergabeansicht 55.

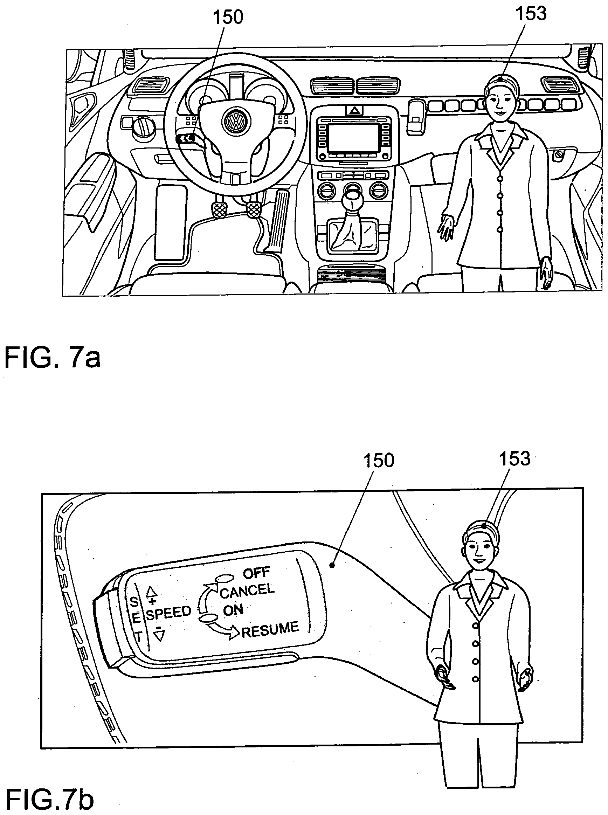

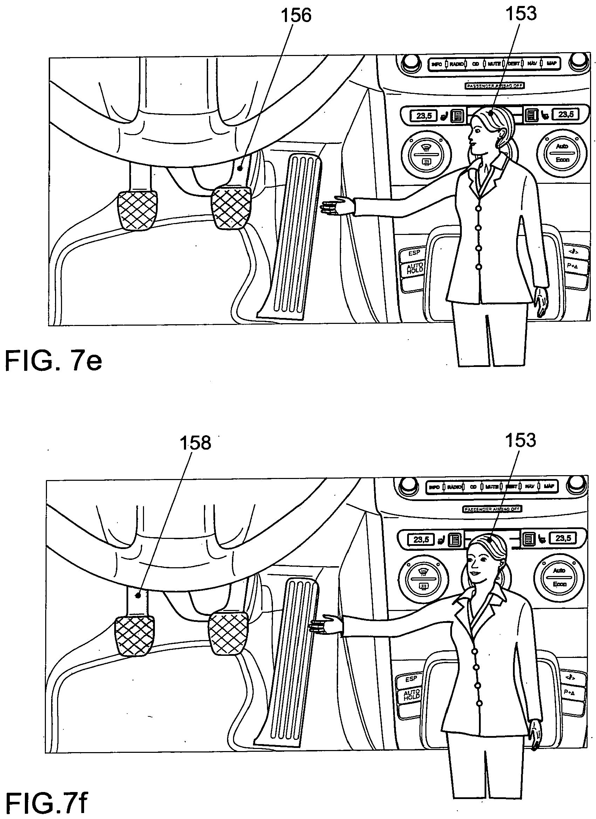

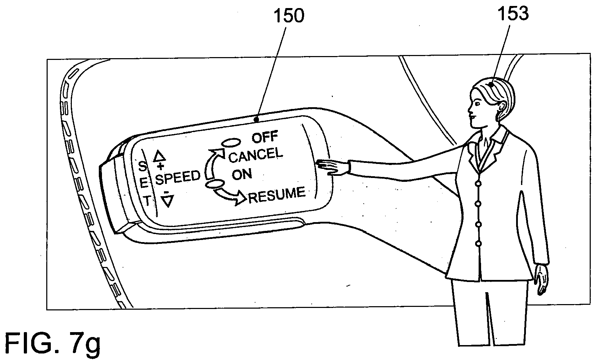

Anhand von Fig. 7a bis 7g soll exemplarisch eine Informationswiedergabe, die vorzugsweise animiert, beispielsweise filmisch, und unterstützt durch einen virtuellen Charakter, der auch als Avatar bezeichnet wird, dargestellt werden. Erläutert wird die Informationswiedergabe zur Erklärung der Geschwindigkeitsregelanlage. Dargestellt sind einzelne Ausschnitte aus einer filmisch animierten Informationswiedergabe, in der ein Avatar die Erläuterungen vornimmt.

In Fig. 7a ist das Cockpit eines Kraftfahrzeugs mit allen Anzeige- und Bedieneinrichtungen dargestellt. Ein Bedienhebel 150 der Geschwindigkeitsregelanlage mit allen seinen Bedienelementen ist farblich hervorgehoben dargestellt. Ein Avatar 153 teilt durch Hand- und Körperbewegungen und durch Sprachausgabe über eine akustische Ausgabeeinrichtung mit: "Ich werde Ihnen zeigen, wie Sie die elektronische Geschwindigkeitsregelanlage, kurz GRA, bedienen können." Danach erscheint eine Ansicht nach Fig. 7b. Der Bedienhebel 150 ist gegenüber der Darstellung nach Fig. 7a herangezoomt und nimmt den größten Teil der Anzeigefläche ein. Der Bedienhebel 150 ist auch hier farblich hervorgehoben gegenüber dem Hintergrund dargestellt. Der Avatar 153 gibt Angaben über die Funktion der Geschwindigkeitsregelanlage: "Die Geschwindigkeitsregelanlage hält eine eingestellte Geschwindigkeit zwischen 30 und 210 km/h konstant." Danach gibt der Avatar 153 Informationen zum Einschalten der Geschwindigkeitsregelanlage: "Ziehen Sie diesen Hebel zum Lenkrad hin, bis er einrastet." Im Film bewegt sich der Bedienhebel 150 zum Benutzer hin.

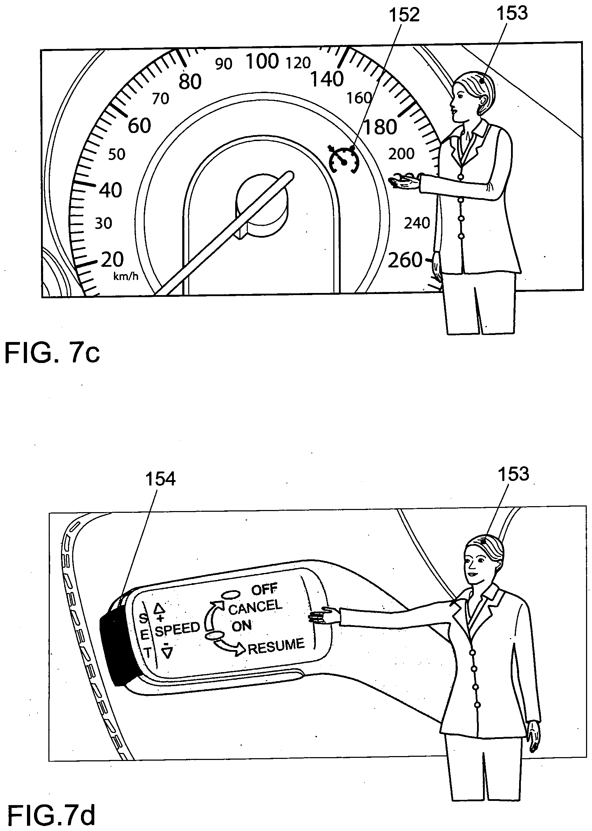

Im Filmablauf erscheint nun eine Ansicht nach Fig. 7c, die eine Ansicht eines Kombiinstrumentes mit einer Geschwindigkeitsanzeige und einem Symbol 152 zeigt. Der Avatar 153 weist durch eine Handbewegung auf das Symbol 152 hin und macht folgende Sprachausgabe: "Nach dem Einschalten erscheint dieses Symbol im Kombünstrument." Danach erklärt der Avatar 153 das Setzen bzw. Speichern der gewünschten Geschwindigkeit: "Fahren Sie mit der gewünschten Geschwindigkeit und drücken Sie die Taste 'Set' seitlich am Hebel." Die "Set"-Taste 154 wird gegenüber den restlichen Bedienelementen zur verbesserten Erkennbarkeit hervorgehoben (Fig. 7d). Nach dem Setzen der Geschwindigkeit erklärt der Avatar 153 die Möglichkeit des Erhöhens und Erniedrigens der gespeicherten Geschwindigkeit auf ähnliche Weise. Zur Darstellung, wie das vorübergehende Ausschalten der Geschwindigkeitsregelanlage mittels des Avatars 153 erklärt wird, werden die Fig. 7e bis 7g des Films herangezogen. In den Figuren ist das jeweilige Bedienelement, Bremspedal 156, Kupplungspedal 158 oder Bedienhebel 150, welches zum Ausschalten verwendet werden kann, gegenüber dem Hintergrund hervorgehoben. Zusätzlich wird die Erklärung der Bedienfunktion über die Bewegung und Sprachausgabe des Avatars 153 unterstützt: "Treten Sie das Bremspedal, treten Sie bei Schaltgetriebefahrzeugen das Kupplungspedal oder drücken Sie den Bedienhebel leicht vom Lenkrad weg, um die Geschwindigkeitsregelanlage vorübergehend auszuschalten. Zum Wiedereinschalten der Geschwindigkeitsregelanlage lassen Sie das Bremspedal bzw. das Kupplungspedal los und ziehen Sie den Bedienhebel leicht zum Lenkrad hin."

Die beschriebenen Ausführungsformen haben lediglich einen beispielhaften Charakter. Insbesondere der menügestützte Bestandteil der Benutzerschnittstelle zur Auswahl der Informationen, die wiedergegeben werden sollen, kann anders ausgestaltet sein.

### Bezugszeichenliste

- 1: Verfahren zum Bereitstellen von Informationen
- 2: Start des Verfahrens
- 3: Informationsmodus aktiviert?
- 4: Nutzerauswahleingabe über grafische Schnittstelle (GUI)?
- 5: Liegt Berührung/Betätigung eines Bedienelements/einer Komponente vor?
- 6: Ausgabe von Informationen
- 7: Ist Informationsmodus deaktiviert?
- 8: Informationssystem
- 9: Fahrzeugcomputer
- 10: Anzeigevorrichtung
- 11: Eingabevorrichtung
- 12: Vorrichtungen
- 13: Kraftfahrzeug
- 14: Cockpit
- 15: Luftauslassgitter
- 16: Drehauswahlschalter
- 17: Multifunktiönsanzeige (Kombiinstrument)
- 18: Mobiltelefonaufnahme mit einem Mobiltelefon
- 19: Anzeigefläche
- 20: Fahrzeugbus
- 21: Steuergeräte
- 22: Erfassungssensoren
- 23: weitere Erfassungssensoren
- 24: weiteres Steuergerät
- 25: Anzeigevorrichtung
- 26: weiteres Luftauslassgitter
- 27: Steuereinrichtung
- 29: Speichervorrichtung
- 31: Multifunktionsbedienvorrichtung
- 33, 35: Bedienelemente
- 37: Drehdrückknöpfe
- 39: Anzeigevorrichtung
- 41: Anzeigefläche
- 43: Einführschlitz
- 51: grafische Hauptansicht
- 53: Kopfleiste
- 55: Informationswiedergabeansicht
- 55': korrespondierende Informationswiedergabeansicht
- 57, 57', 57", 57'": Komponenten und Bedienelemente
- 59: Pfeil
- 61: grafische Unteransicht
- 63: Bezeichnung
- 65: Bedienelementgruppen
- 67: Bedienhebel
- 71: Ansicht
- 71': korrespondierende Ansicht
- 73: Wiedergabebedienelement "Kapitel zurück"
- 75: Wiedergabebedienelement "Pause"
- 75': Wiedergabebedienelement "Abspielen"
- 77: Wiedergabebedienelement "Kapitel vor"
- 79: Verlaufsbalken
- 81: Kapitelbezeichnung
- 83: Bedienelement "Liste"
- 85: Knappleistenelement "Auswahl"
- 91: Menühauptansicht
- 93: Listeneintrag "1 Lenkrad"
- 95: Listeneintrag "2 Klimatronik"
- 97: Listeneintrag "3 Fahrersitz"
- 99: Scroll bar (Rollbalken)
- 101: Aufwärtstaste
- 103: Abwärtstaste
- 105: Menüunteransicht
- 107: weiterer Listeneintrag "1.1. GRA"
- 109: weiterer Listeneintrag "1.2. Radiosteuerung"
- 110: Bedienelement "Grafik"
- 111: Auswahlansicht
- 113: Klappleiste
- 115: Klappleisteneintrag "Einführung"
- 117: Klappleisteneintrag "GRA einschalten"
- 119: Klappleisteneintrag "Geschwindigkeit speichern"
- 121: Klappleisteneintrag "Geschwindigkeit erhöhen"
- 123: Abbruchtaste
- 125: Rücksprungtaste
- 127: Hometaste
- 131: Suchtaste
- 133: Tastaturansicht
- 135: "O"-Taste
- 137: "0-9"-Taste
- 139-141: Listenunteransicht
- 143: "OK"-Taste
- 145: Suchergebnisansicht
- 147: "neue Suche"-Taste
- 149: "Abbruch"-Taste
- 150: Bedienhebel
- 152: Symbol
- 153: Avatar
- 154: "Set"-Taste
- 156: Bremspedal
- 158: Kupplungspedal

## Patentansprüche

1. Kraftfahrzeug (13) mit einem Informationssystem (8), wobei das Informationssystem (8) mindestens eine Ausgabeeinrichtung, eine Steuereinrichtung (27), eine Speichervorrichtung (29), in der Informationen über Fahrzeugsysteme, Fahrzeugfunktionen und/oder Dienste abgelegt sind, und mindestens eine Eingabeeinrichtung zum Erfassen einer Nutzerauswahleingabe zur Auswahl eines der Fahrzeugsysteme, einer der Fahrzeugfunktionen oder eines der Dienste umfasst, wobei die Steuereinrichtung (27) ausgebildet ist, als Reaktion auf die über die Nutzerauswahleingabe erfasste Auswahl zumindest einen Teil der Informationen über das ausgewählte Fahrzeugsystem, die ausgewählte Fahrzeugfunktion und/oder den ausgewählten Dienst mittels der mindestens einen Ausgabeeinrichtung auszugeben,
**dadurch gekennzeichnet, dass**
ein Informationsmodus vorgesehen ist, in dem mittels eines Betätigens oder Berührens einer Komponente oder eines Bedienelementes des Kraftfahrzeugs (13), die für eine Bedienung, Verwendung, Ausführung und/oder Bereitstellung eines der Fahrzeugsysteme, einer der Fahrzeugfunktion und/oder eines der Dienste vorgesehen sind, die Nutzerauswahleingabe für die Auswahl des Entsprechenden der Fahrzeugsysteme, der Fahrzeugfunktionen oder der Dienste vornehmbar ist, wobei mindestens ein Erfassungssensor (22, 23) vorgesehen ist, der bei dem Betätigen oder dem Berühren der Komponente oder des Bedienelements ein die Nutzerauswahleingabe repräsentierendes Signal zusätzlich zu einem gegebenenfalls von der Komponente oder dem Bedienelement erzeugten und für eine Bedienung, Verwendung, Ausführung und/oder Bereitstellung eines der Fahrzeugsysteme, einer der Fahrzeugfunktion und/oder eines der Dienste vorgesehen Signals erzeugt.

2. Kraftfahrzeug (13) mit dem Informationssystem (8) nach Anspruch 1,
**dadurch gekennzeichnet, dass** der mindestens eine Erfassungssensor (22, 23) an einer Komponente und/oder einem Bedienelement des Kraftfahrzeugs (13) angeordnet ist, bei dessen Betätigung oder Berührung kein Signal für eine Bedienung, Verwendung, Ausführung und/oder Bereitstellung eines der Fahrzeugsysteme, einer der Fahrzeugfunktion und/oder eines der Dienste erzeugt wird.

3. Kraftfahrzeug (13) mit dem Informationssystem (8) nach einem der genannten Ansprüche,
**dadurch gekennzeichnet, dass** der mindestens eine Erfassungssensor (23) mit einer Auswerteeinheit eine eine Position eines Betätigungselements, insbesondere eines Körperteils eines Nutzers, am Bevorzugtesten eines Fingers, im Raum bestimmende Positionsermittlungseinheit bildet.

4. Kraftfahrzeug (13) mit dem Informationssystem (8) nach einem der genannten Ansprüche,
**dadurch gekennzeichnet, dass** die Fahrzeugsysteme, Fahrzeugfunktionen und/oder Dienste mit der Steuereinrichtung (27) informationstechnisch gekoppelt sind und die Steuereinrichtung (27) den Fahrzeugsystemen, Fahrzeugfunktionen und/oder Diensten einen Betreib im Informationsmodus signalisiert, wobei die Fahrzeugsysteme, Fahrzeugfunktionen und/oder Dienste ausgestaltet sind, dass sie während der Betrieb im Informationsmodus signalisiert ist, Signale von Komponenten und Bedienelementen aufgrund von Berühr- oder Betätigungshandlungen nicht als Steuersignale interpretieren und, sofern diese Signale der Steuereinrichtung (27) informationstechnisch nicht bereits übermittelt wurden, die Steuereinrichtung (27) über die erfasste Berühr- oder Betätigungshandlung informieren.

5. Kraftfahrzeug (13) mit dem Informationssystem (8) nach einem der genannten Ansprüche,
**dadurch gekennzeichnet, dass** im Zusammenwirken der Steuereinrichtung (27) oder einer weiteren Steuereinrichtung mit einer Anzeigevorrichtung (25) eine grafische Benutzerschnittstelle umgesetzt ist, wobei die grafische Benutzerschnittstelle ausgestaltet ist, dass in einem grafischen Eingabemodus die Komponenten und die Bedienelemente des Kraftfahrzeugs auf einer Anzeigefläche (19) grafisch dargestellt sind, die für die Bedienung, Verwendung, Ausführung und/oder Bereitstellung eines der Fahrzeugsysteme, der Fahrzeugfunktionen und/oder der Dienste vorgesehen sind, und die Auswahl eines der Fahrzeugsysteme, einer der Fahrzeugfunktionen oder eines der Dienste vornehmbar ist, indem über die grafische Benutzerschnittstelle eine Entsprechende der grafisch dargestellten Komponenten oder eines Entsprechenden der grafisch dargestellten Bedienelemente ausgewählt wird.

6. Kraftfahrzeug (13) mit dem Informationssystem (8) nach einem der genannten Ansprüche,
**dadurch gekennzeichnet, dass** mit der Anzeigevorrichtung die Positionsermittlungseinheit oder eine weitere Positionsermittlungseinheit für eine Bedienung der grafischen Benutzerschnittstelle gekoppelt sind, über die eine Position auf der Anzeigefläche durch einen Nutzer festlegbar ist, wobei das Fahrzeugsystem, die Fahrzeugfunktion oder der Dienst ausgewählt sind, dessen oder deren Komponente oder Bedienelement an der festgelegten Position dargestellt ist.

7. Kraftfahrzeug (13) mit dem Informationssystem (8) nach einem der genannten Ansprüche, **dadurch gekennzeichnet, dass** die Anzeigevorrichtung und die hiermit gekoppelte Positionsermittlungseinheit oder die weitere Positionsermittlungseinheit als Touchscreen ausgebildet sind.

8. Kraftfahrzeug (13) mit dem Informationssystem (8) nach einem der genannten Ansprüche, **dadurch gekennzeichnet, dass** die Komponenten und Bedienelemente grafisch in ihrem verbauten und/oder verwendeten Zustand im Kraftfahrzeug (13), insbesondere fotorealistisch, dargestellt sind.

9. Kraftfahrzeug (13) mit dem Informationssystem (8) nach einem der genannten Ansprüche, **dadurch gekennzeichnet, dass** ein Begriffs-Eingabemodus vorgesehen ist, in dem eines der Fahrzeugsysteme, eine der Fahrzeugfunktionen und/oder einer der Dienste mittels einer Begriffserfassung und mittels eines Vergleichs des mindestens einen erfassten Begriffs mit Bezeichnungen der Fahrzeugsysteme, der Fahrzeugfunktionen und/oder der Dienste auswählbar sind.

10. Kraftfahrzeug (13) mit dem Informationssystem (8) nach einem der genannten Ansprüche, **dadurch gekennzeichnet, dass** die Benutzerschnittstelle so ausgestaltet ist, dass in einem Menü-Eingabemodus eines der Fahrzeugsysteme, eine der Fahrzeugfunktionen und/oder einer der Dienste über auf der Anzeigefläche dargestellte Menüs auswählbar sind, die alphanumerische Einträge umfassen und vorzugsweise listenartig ausgestaltet sind.

11. Verfahren (1) zum Bereitstellen von Informationen in einem Kraftfahrzeug (13) über Fahrzeugsysteme, Fahrzeugfunktionen und/oder Dienste, die in einer Speichervorrichtung abgelegt sind, mittels eines Informationssystems (8) umfassend die Schritte:
Erfassen einer Nutzerauswahleingabe,
Auswahl eines der Fahrzeugsysteme, einer der Fahrzeugfunktionen oder eines der Dienste basierend auf der Nutzerauswahleingabe,
Auslesen zumindest eines Teils der Informationen über das ausgewählte Fahrzeugsystem, die ausgewählte Fahrzeugfunktion oder den ausgewählten Dienst aus der Speichervorrichtung (29) und
Ausgeben des zumindest einen Teils der Informationen über das ausgewählte Fahrzeugsystem, die ausgewählte Fahrzeugfunktion oder den ausgewählten Dienst mittels mindestens einer Ausgabeeinrichtung,
**dadurch gekennzeichnet, dass**
eine Aktivierung und/oder Deaktivierung eines Informationsmodus erfasst wird und
im Informationsmodus von einer Komponente und/oder von einem Bedienelement des Kraftfahrzeugs, die für eine Bedienung, Verwendung, Ausführung und/oder Bereitstellung eines der Fahrzeugsysteme, einer der Fahrzeugfunktionen und/oder eines der Dienste vorgesehen sind, aufgrund einer Berühr- oder Betätigungshandlung eines Nutzers erzeugte Signale als Nutzerauswahleingabe für die Auswahl eines Entsprechenden der Fahrzeugsysteme, der Fahrzeugfunktionen oder der Dienste verwendet oder interpretiert werden, wobei mindestens ein Erfassungssensor vorgesehen ist, mit dem bei dem Betätigen oder dem Berühren der Komponente oder des Bedienelements ein die Nutzerauswahleingabe repräsentierendes Signal zusätzlich zu einem gegebenenfalls von der Komponente oder dem Bedienelement erzeugten und für eine Bedienung, Verwendung, Ausführung und/oder Bereitstellung eines der Fahrzeugsysteme, einer der Fahrzeugfunktion und/oder eines der Dienste vorgesehen Signals erzeugt wird.

12. Verfahren (1) nach Anspruch 11, **dadurch gekennzeichnet, dass** der mindestens eine Erfassungssensor (22, 23) an einer Komponente und/oder einem Bedienelement des Kraftfahrzeugs angeordnet ist, bei dessen Betätigung oder Berührung kein Signal für eine Bedienung, Verwendung, Ausführung und/oder Bereitstellung eines der Fahrzeugsysteme, einer der Fahrzeugfunktion und/oder eines der Dienste erzeugt wird.

13. Verfahren (1) nach einem der Ansprüche 11 bis 12, **dadurch gekennzeichnet, dass** mittels des mindestens einen Erfassungssensors (23) zusammen mit einer Auswerteeinheit eine Position eines Betätigungselements, insbesondere eines Körperteils eines Nutzers, am Bevorzugtesten eines Fingers, im Raum bestimm wird.

14. Verfahren (1) nach einem der Ansprüche 11 bis 13, **dadurch gekennzeichnet, dass** die Steuereinrichtung den Fahrzeugsystemen, Fahrzeugfunktionen und/oder Diensten einen Betreib im Informationsmodus signalisiert, wobei die Fahrzeugsysteme, Fahrzeugfunktionen und/oder Dienste, während der Betrieb im Informationsmodus signalisiert ist, Signale von Komponenten und Bedienelementen aufgrund von Berühr- oder Betätigungshandlungen nicht als Steuersignale interpretieren und, sofern diese Signale der Steuereinrichtung (27) informationstechnisch nicht bereits übermittelt wurden, die Steuereinrichtung (27) über die erfasste Berühr- und Betätigungshandlung informieren.

15. Verfahren (1) nach einem der Ansprüche 11 bis 14, **dadurch gekennzeichnet, dass** im Zusammenwirken der Steuereinrichtung (27) oder einer weiteren Steuereinrichtung mit einer Anzeigevorrichtung eine grafische Benutzerschnittstelle umgesetzt wird, wobei die grafische Benutzerschnittstelle ausgestaltet ist, dass in einem grafischen Eingabemodus die Komponenten und die Bedienelemente des Kraftfahrzeugs auf einer Anzeigefläche (19) grafisch dargestellt werden, die für die Bedienung, Verwendung, Ausführung und/oder Bereitstellung eines der Fahrzeugsysteme, der Fahrzeugfunktion und/oder der Dienste vorgesehen sind, und die Auswahl eines der Fahrzeugsysteme, einer der Fahrzeugfunktionen oder eines der Dienste vorgenommen wird, in dem über die grafische Benutzerschnittstelle eine Auswahl der Entsprechenden der grafisch dargestellten Komponenten oder des Entsprechenden der grafisch dargestellten Bedienelemente erfasst wird.

16. Verfahren (1) nach einem der Ansprüche 11 bis 15, **dadurch gekennzeichnet, dass** mit der Anzeigevorrichtung eine Positionsermittlungseinheit oder eine weitere Positionsermittlungseinheit für eine Bedienung der grafischen Benutzerschnittstelle gekoppelt ist, über die eine durch einen Nutzer festgelegte Position auf der Anzeigefläche erfasst wird und das Fahrzeugsystem, die Fahrzeugfunktion oder der Dienst ausgewählt wird, dessen oder deren Komponente oder Bedienelement an der festgelegten Position dargestellt ist.

17. Verfahren (1) nach einem der Ansprüche 11 bis 16, **dadurch gekennzeichnet, dass** die Nutzerauswahleingabe mittels eines Touchscreens erfasst wird, der die Anzeigevorrichtung (25) und die hiermit gekoppelte Positionsermittlungseinheit oder weitere Positionsermittlungseinheit umfasst.

18. Verfahren (1) nach einem der Ansprüche 11 bis 17, **dadurch gekennzeichnet, dass** die Komponenten und Bedienelemente grafisch in ihrem verbauten und/oder verwendeten Zustand im Kraftfahrzeug (13), insbesondere photorealistisch, dargestellt werden.

19. Verfahren (1) nach einem der Ansprüche 11 bis 18, **dadurch gekennzeichnet, dass** ein Begriffs-Eingabemodus vorgesehen ist, in dem mindestens ein Begriff erfasst wird und der mindestens eine erfasste Begriff mit Bezeichnungen der Fahrzeugsysteme, der Fahrzeugfunktionen und/oder der Dienste verglichen wird und das eine der Fahrzeugsysteme, die eine der Fahrzeugfunktionen oder der eine der Dienste basierend auf einem Vergleichsergebnis ausgewählt wird.

20. Verfahren (1) nach einem der Ansprüche 11 bis 19, **dadurch gekennzeichnet, dass** die Benutzerschnittstelle so ausgestaltet ist, dass in einem Menü-Eingabemodus Menüs dargestellt werden, die alphanumerische Einträge umfassen und vorzugsweise listenartig ausgestaltet sind, und das eine der Fahrzeugsysteme, die eine der Fahrzeugfunktionen und/oder der einer der Dienste mittels des Erfassen einer Auswahl eines der Einträge ausgewählt wird.

## Claims

1. Motor vehicle (13) having an information system (8), wherein the information system (8) comprises at least one output device, a control device (27), a memory apparatus (29), which stores information about vehicle systems, vehicle functions and/or services, and at least one input device for capturing a user selection input for selecting one of the vehicle systems, one of the vehicle functions or one of the services, wherein the control device (27) is designed to react to the selection captured by means of the user selection input by outputting at least one portion of the information about the selected vehicle system, the selected vehicle function and/or the selected service by means of the at least one output device,
**characterized in that**
an information mode is provided in which operating or touching a component or an operator control element of the motor vehicle (13), which are provided for operator control, use, execution and/or provision of one of the vehicle systems, of one of the vehicle functions and/or of one of the services, can be used to perform the user selection input for selecting the relevant one of the vehicle systems, of the vehicle functions or of the services, wherein at least one capture sensor (22, 23) is provided that, when the component or the operator control element is operated or touched, produces a signal representing the user selection input, in addition to a signal that may be produced by the component or the operator control element and is provided for operator control, use, execution and/or provision of one of the vehicle systems, of one of the vehicle functions and/or of one of the services.

2. Motor vehicle (13) having the information system (8) according to Claim 1,
**characterized in that** the at least one capture sensor (22, 23) is arranged on a component and/or an operator control element of the motor vehicle (13) that, when operated or touched, does not prompt a signal for operator control, use, execution and/or provision of one of the vehicle systems, of one of the vehicle functions and/or of one of the services to be produced.

3. Motor vehicle (13) having the information system (8) according to either of the cited claims, as claimed in either of the cited claims, **characterized in that** the at least one capture sensor (23), together with an evaluation unit, forms a position ascertainment unit that determines a position of an operating element, particularly of a body part of a user, most preferably of a finger, in space.

4. Motor vehicle (13) having the information system (8) according to one of the cited claims,
**characterized in that** the vehicle systems, vehicle functions and/or services are coupled to the control device (27) for information purposes and the control device (27) signals operation in information mode to the vehicle systems, vehicle functions and/or services, wherein the vehicle systems, vehicle functions and/or services are designed so that, while operation in information mode is signalled, they do not interpret signals from components and operator control elements on the basis of touch or operating actions as control signals and, if these signals have not already been transmitted to the control device (27) for information purposes, inform the control device (27) about the captured touch or operating action.

5. Motor vehicle (13) having the information system (8) according to one of the cited claims,
**characterized in that** interaction of the control device (27) or of a further control device with a display apparatus (25) prompts a graphical user interface to be implemented, wherein the graphical user interface is designed so that, in a graphical input mode, the components and the operator control elements of the motor vehicle that are provided for operator control, use, execution and/or provision of one of the vehicle systems, of the vehicle functions and/or of the services are graphically presented on a display panel (19), and the selection of one of the vehicle systems, of one of the vehicle functions or of one of the services is performable by virtue of the graphical user interface being used to select a relevant one of the graphically presented components or a relevant one of the graphically presented operator control elements.

6. Motor vehicle (13) having the information system (8) according to one of the cited claims,
**characterized in that** the display apparatus has the position ascertainment unit or a further position ascertainment unit coupled to it for operator control of the graphical user interface, which can be used by a user to stipulate a position on the display panel, wherein the vehicle system, the vehicle function or the service whose component or operator control element is presented at the stipulated position is selected.

7. Motor vehicle (13) having the information system (8) according to one of the cited claims,
**characterized in that** the display apparatus and the position ascertainment unit coupled thereto or the further position ascertainment unit are in the form of a touchscreen.

8. Motor vehicle (13) having the information system (8) according to one of the cited claims,
**characterized in that** the components and operator control elements are graphically presented, particularly in a photographically realistic manner, in their installed and/or employed state in the motor vehicle (13).

9. Motor vehicle (13) having the information system (8) according to one of the cited claims,
**characterized in that** a term input mode is provided in which one of the vehicle systems, one of the vehicle functions and/or one of the services is/are selectable by means of a term capture and by means of a comparison of the at least one captured term with designations of the vehicle systems, of the vehicle functions and/or of the services.

10. Motor vehicle (13) having the information system (8) according to one of the cited claims,
**characterized in that** the user interface is designed such that one of the vehicle systems, one of the vehicle functions and/or one of the services is/are selectable in a menu input mode using menus presented on the display panel that comprise alphanumeric entries and are preferably designed in list-like fashion.

11. Method (1) for providing information in a motor vehicle (13) about vehicle systems, vehicle functions and/or services that are stored in a memory apparatus by means of an information system (8), comprising the steps of:
capture of a user selection input,
selection of one of the vehicle systems, of one of the vehicle functions or of one of the services on the basis of the user selection input,
reading of at least one portion of the information about the selected vehicle system, the selected vehicle function or the selected service from the memory apparatus (29), and
output of the at least one portion of the information about the selected vehicle system, the selected vehicle function or the selected service by means of at least one output device,
**characterized in that**
activation and/or deactivation of an information mode is captured, and, in information mode, a component and/or an operator control element of the motor vehicle, which are provided for operator control, use, execution and/or provision of one of the vehicle systems, of one of the vehicle functions and/or of one of the services, uses or interprets a signal produced on the basis of a touch or operating action by a user as a user selection input for selecting a relevant one of the vehicle systems, of the vehicle functions or of the services, wherein at least one capture sensor is provided that is used, when the component or the operator control element is operated or touched, to produce a signal representing the user selection input, in addition to a signal that may be produced by the component or the operator control element and is provided for operator control, use, execution and/or provision of one of the vehicle systems, of one of the vehicle functions and/or of one of the services.

12. Method (1) according to Claim 11, **characterized in that** the at least one capture sensor (22, 23) is arranged on a component and/or an operator control element of the motor vehicle that, when operated or touched, does not prompt a signal for operator control, use, execution and/or provision of one of the vehicle systems, of one of the vehicle functions and/or of one of the services to be produced.

13. Method (1) according to either of Claims 11 and 12, **characterized in that** the at least one capture sensor (23), together with an evaluation unit, is used to determine a position of an operating element, particularly of a body part of a user, most preferably of a finger, in space.

14. Method (1) according to one of Claims 11 to 13,
**characterized in that** the control device signals operation in information mode to the vehicle systems, vehicle functions and/or services, wherein the vehicle systems, vehicle functions and/or services, while operation in information mode is signalled, do not interpret signals from components and operator control elements on the basis of touch or operating actions as control signals and, if these signals have not already been transmitted to the control device (27) for information purposes, inform the control device (27) about the captured touch and operating action.

15. Method (1) according to one of Claims 11 to 14,
**characterized in that** interaction of the control device (27) or of a further control device with a display apparatus prompts a graphical user interface to be implemented, wherein the graphical user interface is designed so that, in a graphical input mode, the components and the operator control elements of the motor vehicle that are provided for operator control, use, execution and/or provision of one of the vehicle systems, of the vehicle functions and/or of the services are graphically presented on a display panel (19), and the selection of one of the vehicle systems, of one of the vehicle functions or of one of the services is performed by virtue of the graphical user interface being used to capture a selection of the relevant one of the graphically presented components or the relevant one of the graphically presented operator control elements.

16. Method (1) according to one of Claims 11 to 15,
**characterized in that** the display apparatus has a position ascertainment unit or a further position ascertainment unit coupled to it for operator control of the graphical user interface, which is used to capture a position, stipulated by a user, on the display panel and to select the vehicle system, the vehicle function or the service whose component or operator control element is presented at the stipulated position.

17. Method (1) according to one of Claims 11 to 16,
**characterized in that** the user selection input is captured by means of a touchscreen that comprises the display apparatus (25) and the position ascertainment unit or further position ascertainment unit coupled thereto.

18. Method (1) according to one of Claims 11 to 17,
**characterized in that** the components and operator control elements are graphically presented, particularly in a photographically realistic manner, in their installed and/or employed state in the motor vehicle (13).

19. Method (1) according to one of Claims 11 to 18,
**characterized in that** a term input mode is provided in which at least one term is captured and the at least one captured term is compared with designations of the vehicle systems, of the vehicle functions and/or of the services and one of the vehicle systems, one of the vehicle functions or one of the services is selected on the basis of a comparison result.

20. Method (1) according to one of Claims 11 to 19,
**characterized in that** the user interface is designed such that menus that comprise alphanumeric entries and are preferably designed in list-like fashion are presented in a menu input mode, and one of the vehicle systems, one of the vehicle functions and/or one of the services is selected by means of the capture of a selection of one of the entries.

## Revendications

1. Véhicule automobile (13) équipé d'un système d'information (8), le système d'information (8) comprenant au moins un appareil de sortie, un appareil de commande (27), un dispositif de mémorisation (29) dans lequel sont stockées des informations à propos des systèmes du véhicule, des fonctions du véhicule et/ou des services, et au moins un appareil de saisie destiné à détecter une saisie de sélection de l'utilisateur en vue de sélectionner l'un des systèmes du véhicule, l'une des fonctions du véhicule ou l'un des services, l'appareil de commande (27) étant configuré pour, en réaction à la sélection détectée par le biais de la saisie de sélection de l'utilisateur, délivrer au moins une partie des informations à propos du système sélectionné du véhicule, de la fonction sélectionnée du véhicule et/ou du service sélectionné au moyen de l'au moins un appareil de sortie,
**caractérisé en ce que**
il existe un mode d'information dans lequel la saisie de sélection de l'utilisateur pour la sélection de l'élément correspondant parmi les systèmes du véhicule, les fonctions du véhicule ou les services peut être effectuée au moyen d'un actionnement ou d'un toucher d'un composant ou d'un élément de commande du véhicule automobile (13), lequel est prévu pour une commande, une utilisation, une exécution et/ou une mise à disposition de l'un des systèmes du véhicule, de l'une des fonctions du véhicule et/ou de l'un des services, au moins un capteur de détection (22, 23) étant présent, lequel génère, lors de l'actionnement ou du toucher du composant ou de l'élément de commande, un signal représentant la saisie de sélection de l'utilisateur en plus d'un signal éventuellement généré par le composant ou l'élément de commande et prévu pour une commande, une utilisation, une exécution et/ou une mise à disposition de l'un des systèmes du véhicule, de l'une des fonctions du véhicule et/ou de l'un des services.

2. Véhicule automobile (13) équipé du système d'information (8) selon la revendication 1, **caractérisé en ce que** l'au moins un capteur de détection (22, 23) est disposé sur un composant et/ou un élément de commande du véhicule automobile (13), lors de l'actionnement ou du toucher duquel aucun signal n'est généré pour une commande, une utilisation, une exécution et/ou une mise à disposition de l'un des systèmes du véhicule, de l'une des fonctions du véhicule et/ou de l'un des services.

3. Véhicule automobile (13) équipé du système d'information (8) selon l'une des revendications précédentes, **caractérisé en ce que** l'au moins un capteur de détection (23) forme, avec une unité d'interprétation, une unité de détermination de position qui détermine une position dans l'espace d'un élément d'actionnement, notamment d'une partie du corps d'un utilisateur, de préférence d'un doigt.

4. Véhicule automobile (13) équipé du système d'information (8) selon l'une des revendications précédentes, **caractérisé en ce que** les systèmes du véhicule, les fonctions du véhicule et/ou les services sont connectés de manière informatique avec l'appareil de commande (27) et l'appareil de commande (27) signale aux systèmes du véhicule, aux fonctions du véhicule et/ou aux services un fonctionnement en mode d'information, les systèmes du véhicule, les fonctions du véhicule et/ou les services étant configurés pour qu'il leur soit signalé pendant le fonctionnement en mode d'information de ne pas interpréter les signaux des composants et des éléments de commande résultant des manipulations de toucher ou d'actionnement comme des signaux de commande et, dans la mesure où ces signaux n'ont pas déjà été communiqués à l'appareil de commande (27) de manière informatique, informer l'appareil de commande (27) à propos de la manipulation de toucher ou d'actionnement détectée.

5. Véhicule automobile (13) équipé du système d'information (8) selon l'une des revendications précédentes, **caractérisé en ce qu'**une interface utilisateur graphique est recomposée par l'interaction de l'appareil de commande (27) ou d'un appareil de commande supplémentaire avec un dispositif d'affichage (25), l'interface utilisateur graphique étant configurée de telle sorte que dans un mode de saisie graphique, les composants et les éléments de commande du véhicule automobile sont représentés graphiquement sur une surface d'affichage (19), laquelle est conçue pour la commande, l'utilisation, l'exécution et/ou la mise à disposition de l'un des systèmes du véhicule, des fonctions du véhicule et/ou des services, et la sélection de l'un des systèmes du véhicule, de l'une des fonctions du véhicule et/ou de l'un des services peut être effectuée en sélectionnant par le biais de l'interface utilisateur graphique un composant correspondant parmi les composants représentés graphiquement ou un élément de commande correspondant parmi les éléments de commande représentés graphiquement.

6. Véhicule automobile (13) équipé du système d'information (8) selon l'une des revendications précédentes, **caractérisé en ce que** l'unité de détermination de position ou une unité de détermination de position supplémentaire est connectée au dispositif d'affichage pour une commande de l'interface utilisateur graphique, par le biais de laquelle une position sur la surface d'affichage peut être définie par un utilisateur, le système du véhicule, la fonction du véhicule et/ou le service sélectionné étant celui/celle dont le composant ou l'élément de commande est représenté à la position définie.

7. Véhicule automobile (13) équipé du système d'information (8) selon l'une des revendications précédentes, **caractérisé en ce que** le dispositif d'affichage et l'unité de détermination de position qui y est connectée ou l'unité de détermination de position supplémentaire sont réalisés sous la forme d'un écran tactile.

8. Véhicule automobile (13) équipé du système d'information (8) selon l'une des revendications précédentes, **caractérisé en ce que** les composants et les éléments de commande sont représentés sous forme graphique dans leur état monté et/ou utilisé dans le véhicule automobile (13), notamment en photoréalisme.

9. Véhicule automobile (13) équipé du système d'information (8) selon l'une des revendications précédentes, **caractérisé en ce qu'**il existe un mode de saisie de terme dans lequel l'un des systèmes du véhicule, l'une des fonctions du véhicule et/ou l'un des services peuvent être sélectionnés au moyen d'une saisie de terme et au moyen d'une comparaison de l'au moins un terme saisi avec des désignations des systèmes du véhicule, des fonctions du véhicule et/ou des services.

10. Véhicule automobile (13) équipé du système d'information (8) selon l'une des revendications précédentes, **caractérisé en ce que** l'interface utilisateur graphique est configurée de telle sorte que dans un mode de saisie par menu, l'un des systèmes du véhicule, l'une des fonctions du véhicule et/ou l'un des services peuvent être sélectionnés par le biais de menus représentés sur la surface d'affichage, lesquels comportent des entrées alphanumériques et sont de préférence configurés sous forme de listes.

11. Procédé (1) de mise à disposition d'informations dans un véhicule automobile (13) à propos de systèmes du véhicule, de fonctions du véhicule et/ou de services, lesquels sont stockées dans un dispositif de mémorisation, au moyen d'un système d'information (8), comprenant les étapes suivantes :
détection d'une saisie de sélection de l'utilisateur,
sélection de l'un des systèmes du véhicule, de l'une des fonctions du véhicule ou de l'un des services sur la base de la saisie de sélection de l'utilisateur,
lecture d'au moins une partie des informations à propos du système sélectionné du véhicule, de la fonction sélectionnée du véhicule ou du service sélectionné depuis le dispositif de mémorisation (29), et
délivrance de l'au moins une partie des informations à propos du système sélectionné du véhicule, de la fonction sélectionnée du véhicule et/ou du service sélectionné au moyen d'au moins un dispositif de sortie,
**caractérisé en ce que**
une activation et/ou une désactivation d'un mode d'information est détectée et, dans le mode d'information, des signaux générés du fait d'une manipulation de toucher ou d'actionnement d'un utilisateur sont utilisés ou interprétés par un composant et/ou un élément de commande du véhicule automobile, lesquels sont prévus pour une commande, une utilisation, une exécution et/ou une mise à disposition de l'un des systèmes du véhicule, de l'une des fonctions du véhicule et/ou de l'un des services, en tant que saisie de sélection de l'utilisateur pour la sélection d'un élément correspondant parmi les systèmes du véhicule, les fonctions du véhicule ou les services, au moins un capteur de détection étant présent, avec lequel, lors de l'actionnement ou du toucher du composant ou de l'élément de commande, est généré un signal représentant la saisie de sélection de l'utilisateur en plus d'un signal éventuellement généré par le composant ou l'élément de commande et prévu pour une commande, une utilisation, une exécution et/ou une mise à disposition de l'un des systèmes du véhicule, de l'une des fonctions du véhicule et/ou de l'un des services.

12. Procédé (1) selon la revendication 11,
**caractérisé en ce que** l'au moins un capteur de détection (22, 23) est disposé sur un composant et/ou un élément de commande du véhicule automobile, lors de l'actionnement ou du toucher duquel aucun signal n'est généré pour une commande, une utilisation, une exécution et/ou une mise à disposition de l'un des systèmes du véhicule, de l'une des fonctions du véhicule et/ou de l'un des services.

13. Procédé (1) selon l'une des revendications 11 à 12, **caractérisé en ce qu'**une position dans l'espace d'un élément d'actionnement, notamment d'une partie du corps d'un utilisateur, de préférence d'un doigt, est déterminée au moyen de l'au moins un capteur de détection (23) conjointement avec une unité d'interprétation.

14. Procédé (1) selon l'une des revendications 11 à 13, **caractérisé en ce que** l'appareil de commande signale aux systèmes du véhicule, aux fonctions du véhicule et/ou aux services un fonctionnement en mode d'information, les systèmes du véhicule, les fonctions du véhicule et/ou les services, pendant que le fonctionnement en mode d'information est signalé, n'interprétant pas les signaux des composants et des éléments de commande résultant des manipulations de toucher ou d'actionnement comme des signaux de commande et, dans la mesure où ces signaux n'ont pas déjà été communiqués à l'appareil de commande (27) de manière informatique, informant l'appareil de commande (27) à propos de la manipulation de toucher ou d'actionnement détectée.

15. Procédé (1) selon l'une des revendications 11 à 14, **caractérisé en ce qu'**une interface utilisateur graphique est recomposée par l'interaction de l'appareil de commande (27) ou d'un appareil de commande supplémentaire avec un dispositif d'affichage, l'interface utilisateur graphique étant configurée de telle sorte que dans un mode de saisie graphique, les composants et les éléments de commande du véhicule automobile sont représentés graphiquement sur une surface d'affichage (19), laquelle est conçue pour la commande, l'utilisation, l'exécution et/ou la mise à disposition de l'un des systèmes du véhicule, des fonctions du véhicule et/ou des services, et la sélection de l'un des systèmes du véhicule, de l'une des fonctions du véhicule ou de l'un des services est effectuée en détectant par le biais de l'interface utilisateur graphique une sélection du composant correspondant parmi les composants représentés graphiquement ou de l'élément de commande correspondant parmi les éléments de commande représentés graphiquement.

16. Procédé (1) selon l'une des revendications 11 à 15, **caractérisé en ce qu'**une unité de détermination de position ou une unité de détermination de position supplémentaire est connectée au dispositif d'affichage pour une commande de l'interface utilisateur graphique, par le biais de laquelle une position définie par un utilisateur est détectée sur la surface d'affichage, et le système du véhicule, la fonction du véhicule et/ou le service sélectionné est celui/celle dont le composant ou l'élément de commande est représenté à la position définie.

17. Procédé (1) selon l'une des revendications 11 à 16, **caractérisé en ce que** la sélection de saisie de l'utilisateur est détectée au moyen d'un écran tactile, lequel comprend le dispositif d'affichage (25) et l'unité de détermination de position ou l'unité de détermination de position supplémentaire qui y est connectée.

18. Procédé (1) selon l'une des revendications 11 à 17, **caractérisé en ce que** les composants et les éléments de commande sont représentés sous forme graphique dans leur état monté et/ou utilisé dans le véhicule automobile (13), notamment en photoréalisme.

19. Procédé (1) selon l'une des revendications 11 à 18, **caractérisé en ce qu'**il existe un mode de saisie de terme dans lequel au moins un terme est détecté et l'au moins un terme détecté est comparé avec des désignations des systèmes du véhicule, des fonctions du véhicule et/ou des services et celui parmi les systèmes du véhicule, celle parmi les fonctions du véhicule ou celui parmi les services est sélectionné(e) en se basant sur un résultat de comparaison.

20. Procédé (1) selon l'une des revendications 11 à 19, **caractérisé en ce que** l'interface utilisateur est configurée de telle sorte que dans un mode de saisie par menu sont représentés des menus, lesquels comportent des entrées alphanumériques et sont de préférence configurés sous forme de listes, et celui parmi les systèmes du véhicule, celle parmi les fonctions du véhicule et/ou celui parmi les services est sélectionné au moyen de la détection d'une sélection de l'une des entrées.
